# EUROPÄISCHE PATENTSCHRIFT

(11) **EP 4 019 802 B1**
(45) Veröffentlichungstag und Bekanntmachung des Hinweises auf die Patenterteilung: **26.07.2023**
(21) Anmeldenummer: 21206193.1
(22) Anmeldetag: 03.11.2021
(51) Int. Cl.: F16F 9/348, F16F 9/46

(54) **VENTILANORDNUNG FÜR EINEN SCHWINGUNGSDÄMPFER**
VALVE ASSEMBLY FOR A VIBRATION DAMPER
AGENCEMENT DE SOUPAPE POUR UN AMORTISSEUR DE VIBRATIONS

(30) Priorität: 23.12.2020 DE 102020134820
(43) Veröffentlichungstag der Anmeldung: 29.06.2022
(73) Patentinhaber: KTM AG, 5230 Mattighofen (AT)
(72) Erfinder: WIMMER, Johannes, 84556 Kastl (DE)
(74) Vertreter: Söllner, Udo

(56) Entgegenhaltungen:
- EP-B1- 3 208 489
- WO-A1-2020/026362
- KR-B1- 100 443 884
- US-A1- 2016 025 178

## Beschreibung

Die vorliegende Erfindung betrifft eine Ventilanordnung für einen Schwingungsdämpfer nach dem Oberbegriff des Anspruchs 1. Die Erfindung betrifft darüber hinaus einen Schwingungsdämpfer nach dem Anspruch 12 und ein Fahrzeug mit einem solchen Schwingungsdämpfer nach Anspruch 13. Die US2016/025 178 A1 wird als nächstliegender Stand der Technik betrachtet und offenbart den Oberbegriff des Anspruchs 1.

Bei dem Schwingungsdämpfer kann es sich beispielsweise um ein Teleskopfedergabelbein eines Motorrads handeln oder auch um einen Stoßdämpfer für ein mehr als einspuriges Fahrzeug, also beispielsweise einen Personenkraftwagen, der Schwingungsdämpfer kann auch für die Anwendung im industriellen Bereich vorgesehen sein. Zur Beeinflussung des Dämpfungsverhaltens eines solchen Schwingungsdämpfers kann die Ventilanordnung ein Pilotventil aufweisen, welches als Druckregler fungiert. Die Dämpfereinrichtung oder der Schwingungsdämpfer besitzt üblicherweise zwei Fluidkammern, zwischen denen Dämpfungsfluid ausgetauscht wird. Bei den Fluidkammern handelt es sich um eine erste Kammer oder Druckstufenkammer und eine zweite Kammer oder Zugstufenkammer. Aus der Druckstufenkammer strömt beim Einfedervorgang der Dämpfereinrichtung Dämpfungsfluid in Richtung zur zweiten Kammer oder Zugstufenkammer. Beim Ausfedervorgang oder Rebound strömt Dämpfungsfluid von der Zugstufenkammer in Richtung zur Druckstufenkammer, wobei das Dämpfungsfluid jeweils die Ventilanordnung durchströmt, mit deren Hilfe Dämpfungsarbeit geleistet wird und die die Dämpfereinrichtung beaufschlagenden Schwingungsamplituden bedämpft werden.

Mit dem Pilotventil kann das Öffnungsverhalten der Ventilanordnung oder vorgesteuerten Ventils beeinflusst werden und zwar dadurch, dass in einer Vorsteuerkammer ein Steuerdruck aufgebaut wird, der auf den Ventilkolben des Hauptventils oder einer am Ventilkolben angeordneten Ventilanordnung wirkt.

Die Dämpferkraft verändert sich mit der Geschwindigkeit der Bewegung der Kolbenstange, an welcher der Ventilkolben angeordnet ist.

Wenn das mit einem Schwingungsdämpfer mit einem vorgesteuerten Ventil versehene Fahrzeug eine Bodenunebenheit überfährt, führt dies zu einer Bewegung der Kolbenstange mit einer bestimmten Geschwindigkeit. Steigt diese Geschwindigkeit beispielsweise in Abhängigkeit der Höhe der Kraftbeaufschlagung, welche die Kolbenstange erfährt, führt dies zu einer höheren Dämpferkraft und das am Ventilkolben angeordnete Hauptventil öffnet dann ruckartig oder schlagartig und es kommt zu einem scharfen Knick im Diagramm der Dämpferkraft aufgetragen über der Kolbenstangengeschwindigkeit oder Dämpfergeschwindigkeit. Dieses scharfe Abknicken der Kraftkennlinie aufgetragen über der Dämpfergeschwindigkeit macht sich bei der Fahrt des Fahrzeugs in der Form einer Komforteinbuße bemerkbar, welche bei einem mit einem vorgesteuerten Ventil versehenen Schwingungsdämpfer oftmals zu beobachten ist.

Anhand der EP 3 208 489 B1 ist eine Ventilanordnung mit einem Pilotventil bekannt geworden, welche einen scheibenförmigen Ventilkörper aufweist, der an zwei Steuerkanten zur Anlage gebracht werden kann, nämlich an einer radial innenliegenden Steuerkante 26, welche mit einer Durchströmungsöffnung versehen ist, sodass Dämpfungsfluid in eine benachbarte Ausnehmung 25 strömen kann und den Ventilkörper bis zu einem Bereich beaufschlagen kann, der an einer radial außen liegenden Steuerkante 27 aufliegt. Auf diese Weise kann sich der scheibenförmige Ventilkörper 9 zwar bei der Einfederbewegung des damit versehenen Schwingungsdämpfers von der radial außen liegenden Steuerkante geringfügig abheben, um ein ruckartiges oder schlagartiges Öffnen des Hauptventils zu verhindern, nicht aber bei der den Schwingungsdämpfer beaufschlagenden Reboundbewegung. Wenn nämlich die Reboundbewegung einsetzt, befindet sich der scheibenförmige Ventilkörper in einer von den beiden Steuerkanten getrennten Stellung nach oben abgehoben und die Durchströmungsöffnung zwischen den beiden vom Dämpfungsfluid durchströmten Öffnungen steht offen.

Darüber hinaus weist diese bekannte Ventilanordnung den Nachteil auf, dass der scheibenförmige Ventilkörper an der Innenausnehmung des Ventilgehäuses mit einem radial außen liegenden Bereich des Ventilkörpers anliegt. Der Ventilkörper in der Form einer Ventilscheibe ist daher im Gehäuse außen geführt. Wenn sich der Ventilkörper in der von den Steuerkanten abgehobenen Stellung befindet und die Reboundbewegung einsetzt, wird der scheibenförmige Ventilkörper von der Oberseite her vom Dämpfungsfluid mit Druck beaufschlagt. Diese Druckbeaufschlagung führt dazu, dass sich der Ventilkörper relativ zur Innenausnehmung schräg stellt und verkantet und daher eine undefinierte Stellung einnimmt.

Ausgehend hiervon liegt der vorliegenden Erfindung die Aufgabe zugrunde, eine Ventilanordnung bereitzustellen, welche einerseits das Problem des Verkantens der Ventilscheibe beseitigt und andererseits sowohl bei der Einfederbewegung als auch bei der Reboundbewegung ein sanftes und gleichmäßiges Öffnen des Hauptventils ermöglicht. Auch soll ein Schwingungsdämpfer bereitgestellt werden, der einen komfortablen Übergang von der Einfederbewegung zur Reboundbewegung bereitstellt. Auch soll ein Fahrzeug mit einem solchen Schwingungsdämpfer bereitgestellt werden.

Die Erfindung weist zur Lösung dieser Aufgabe hinsichtlich der Ventilanordnung die im Patentanspruch 1 angegebenen Merkmale auf. Vorteilhafte Ausgestaltungen hiervon sind in den weiteren Ansprüchen beschrieben. Darüber hinaus weist die Erfindung hinsichtlich des Schwingungsdämpfers die im Patentanspruch 12 angegebenen Merkmale auf. Hinsichtlich des bereitzustellenden Fahrzeugs weist die Erfindung die im Patentanspruch 13 angegebenen Merkmale auf.

Die Erfindung schafft eine Ventilanordnung für einen Schwingungsdämpfer, mit einem einen ringförmigen Ventilsitz aufweisenden und zur Aufnahme von Dämpfungsfluid vorgesehenen Ventilgehäuse und einem Ventilkolben, der in einem Innenraum des Ventilgehäuses relativ zum Ventilsitz axial verschiebbar angeordnet ist und der Ventilkolben ein Hauptventil aufweist, welches eine flexible kreisförmige Ventilscheibe aufweist, die mit einer Anlageflächenseite an dem Ventilsitz lösbar in Anlage bringbar ist und die Ventilscheibe mittels eines Führungsstifts am Ventilkolben relativ zu diesem axial bewegbar und radial geführt angeordnet ist und die Ventilanordnung einen Elektromagneten mit einem Anker zur Beaufschlagung eines Pilotventils aufweist, wobei an der von der Anlageflächenseite der Ventilscheibe abgewandten Auflageflächenseite der Ventilscheibe eine flexible Stützscheibe angeordnet ist, an der die Ventilscheibe entlang eines sich in Umfangsrichtung der Ventilscheibe erstreckenden Teilumfangbereichs aufliegt.

Die Stützscheibe liegt also an der Ventilscheibe an und unterstützt diese bei einer Druckbeaufschlagung oder Kraftbeaufschlagung der Ventilscheibe in Richtung zur Stützscheibe. Dadurch, dass die Ventilscheibe aber nur entlang eines in Umfangsrichtung der Ventilscheibe betrachtet sich erstreckenden Teilumfangbereichs an der Stützscheibe aufliegt, besitzt die Ventilscheibe in Umfangsrichtung betrachtet Teilbereiche oder Segmente oder Flächenbereiche, an denen die Stützscheibe bei einer Druckbeaufschlagung der Ventilscheibe in Richtung zur Stützscheibe die Ventilscheibe nicht in Gegenrichtung zur die Ventilscheibe beaufschlagenden Kraftrichtung unterstützen kann, also in den genannten Bereichen keine die Ventilscheibe abstützende Kraft aufnehmen kann, also keine Widerlagerkraft aufbauen kann, was dazu führt, dass sich die Ventilscheibe in diesen nicht von der Stützscheibe unterstützten Bereichen durchbiegt oder verformt.

In den vorstehend erwähnten Teilbereichen oder Segmenten oder Flächenbereichen der Ventilscheibe, an denen diese also nicht an der Stützscheibe aufliegt, führt die Beaufschlagung der Ventilscheibe über das Dämpfungsfluid mit einem Dämpfungsdruck dazu, dass sich die Ventilscheibe im Bereich der Teilbereiche oder Segmente oder Flächenbereiche infolge der Kraftbeaufschlagung durch den Dämpfungsdruck verformen oder verbiegen kann.

Infolgedessen löst sich die Ventilscheibe infolge der Kraftbeaufschlagung an den verformten Teilbereichen oder Segmenten oder Flächenbereichen aus der Anlage an dem ringförmigen Ventilsitz, an dem die Ventilscheibe im unbelasteten Zustand flächig anliegt und es kommt infolgedessen, dass sich die Ventilscheibe bereichsweise vom Ventilsitz abhebt, dazu, dass ein Spaltraum zwischen den verformten Bereichen der Ventilscheibe und dem Ventilsitz entsteht und Dämpfungsfluid durch den Spaltraum hindurch treten kann und somit Dämpfungsarbeit geleistet wird.

Bei einem bekannten vorgesteuerten Ventil liegt die Ventilscheibe des Hauptventils an dem ringförmigen Ventilsitz vollflächig auf und zwar so lange, bis der Hauptkolben oder Ventilkolben infolge der Druckbeaufschlagung der Ventilscheibe oder des Hauptkolbens eine geringfügige Bewegung in Kraftrichtung der Druckbeaufschlagung ausführt. Dies führt zu einer ruckartigen oder schlagartigen Abhubbewegung der Ventilscheibe vom Ventilsitz und es kommt aufgrund der Massenträgheit des Hauptkolbens zu einer Bewegung des Hauptkolbens zusammen mit der Ventilscheibe in Kraftrichtung um einen Wegbetrag, der größer ist als es der resultierenden Kraftdifferenz zwischen der die Ventilscheibe und/oder den Hauptkolben beaufschlagenden Druckkraft und der Gegenkraft, die vom Druck in der Vorsteuerkammer des Pilotventils herrührt, entspricht. Es findet also ein Überschwingen statt.

Aufgrund dieser Überschwingbewegung des Hauptkolbens in Richtung zur Vorsteuerkammer des Pilotventils steigt dann der Druck in der Vorsteuerkammer entsprechend an, was zu einer Gegenbewegung des Hauptkolbens mit dem Hauptventil führt, sodass sich ein zeitabhängiger oszillierender Schwingungsverlauf im Systemdruckverlauf aufgetragen über der Zeit einstellt mit der Folge des vorstehend bereits erwähnten Komfortverlusts.

Die erfindungsgemäße Lösung schafft hier Abhilfe, indem das Öffnungsverhalten des Hauptventils so beeinflusst wird, dass bereits zu einem Zeitpunkt, bevor sich ein Kräftegleichgewicht zwischen der das Hauptventil beaufschlagenden Druckkraft und der Gegenkraft aufgrund des Pilotdrucks sowie etwaiger zusätzlicher Federkraftkomponenten einstellt - zu einem solchen Zeitpunkt würde sich das Hauptventil öffnen, indem es sich vom Ventilsitz abhebt - sich das Hauptventil zu öffnen beginnt, also ein Volumenstrom an Dämpfungsfluid durch das Hauptventil zu strömen beginnt. Dieser Volumenstrom stellt sich aufgrund der bereichsweisen oder abschnittsweisen Abhubbewegung der Ventilscheibe vom Ventilsitz im Bereich der nicht von der Stützscheibe unterstützten Flächen der Ventilscheibe ein.

Dadurch wird ein ruckartiges oder schlagartiges Öffnen des Hauptventils vermieden, der vorstehend beschriebene oszillierende Schwingungsverlauf im Systemdruck wird vermieden und ebenso wird die geschilderte Komforteinbuße vermieden.

Es ist nach einer Weiterbildung der Erfindung vorgesehen, dass die Stützscheibe in Umfangsrichtung mindestens eine Freistellung aufweist, an der die Ventilscheibe frei ist von einer Unterstützung durch die Stützscheibe und sich die Ventilscheibe bei einer Druckbeaufschlagung in Richtung der Stützscheibe im Bereich der Freistellung stärker durchbiegt als im Bereich der Stützscheibe ohne Freistellung.

Mit der mindestens einen Freistellung des Stützscheibe in deren Umfangsrichtung wird erreicht, dass sich zwischen der Stützscheibe und der Ventilscheibe bei einer Druckbeaufschlagung durch den sich in der Ventilanordnung beziehungsweise in der Druckstufenkammer oder der Zugstufenkammer einstellenden Systemdruck im Bereich der Freistellung und geringfügig benachbart dazu keine Stützkraft zwischen der Stützscheibe und der Ventilscheibe einstellt und sich somit die Ventilscheibe aufgrund der Druckbeaufschlagung relativ zur Stützscheibe verbiegen oder durchbiegen oder verformen kann und sich somit ein Spaltraum zwischen der Ventilscheibe und dem Ventilsitz öffnet, durch den Druck entspannt werden kann und Dämpfungsfluid strömen kann und somit Dämpfungsarbeit geleistet werden kann.

Bei der Freistellung kann es sich also um einen Bereich oder Flächenbereich oder Abschnitt oder Segment der Stützscheibe handeln, an dem diese nicht an der Ventilscheibe anliegt und sich somit die Ventilscheibe relativ zur Stützscheibe verbiegen oder verformen oder durchbiegen kann und sich somit ein Spaltraum zwischen der Ventilscheibe und einem Abschnitt oder Flächenbereich oder Segment einer Dichtfläche einstellt, an der die Ventilscheibe anliegt oder zur Anlage gebracht werden kann. Bei der Dichtfläche kann es sich um den vorstehend erwähnten ringförmigen Ventilsitz handeln oder einer anderen Dichtfläche, welche sich zwischen der Ventilscheibe und einem anderen Bauteil einstellt.

Die Ventilscheibe kann also im Bereich der Freistellung einen Durchfluss an Dämpfungsfluid bereitstellen, noch bevor die den Hauptkolben beaufschlagenden Kräfte zu einer Verlagerungsbewegung des Hauptkolbens führen, welche zu einem vollständigen Öffnen des Hauptventils am Hauptkolben führen. Wenn dann die den Hauptkolben beaufschlagenden Kräfte zu einer Verlagerungsbewegung des Hauptkolbens und damit zu einer Öffnungsbewegung des am Hauptkolben vorgesehenen Hauptventils führen, findet unmittelbar vor dem Abheben des Hauptventils vom Ventilsitz schon ein Durchfluss an Dämpfungsfluid im Bereich zwischen der Ventilscheibe des Hauptventils und dem Ventilsitz statt, sodass der Durchfluss an Dämpfungsfluid nicht unmittelbar mit dem Abheben des Hauptventils vom Ventilsitz einsetzt oder startet und auf diese Weise die vorstehend beschriebene Überschwingbewegung des Hauptkolbens vermieden wird.

Es ist nach einer Weiterbildung der Erfindung auch vorgesehen, dass die Stützscheibe einen in einer Draufsichtansicht kreisförmig ausgebildeten ersten Bereich mit einem ersten Durchmesser aufweist, welcher kleiner ist als der Außendurchmesser der Ventilscheibe und sich vom Außenumfang des ersten Bereichs ausgehend mindestens ein, einen zweiten Durchmesser oder eine zweite Erstreckung aufweisender zweiter Bereich radial nach außen gerichtet erstreckt, welcher sich entlang eines Teilbereichs des Umfangs der Stützscheibe in Umfangsrichtung der Stützscheibe erstreckt.

Damit weist die Stützscheibe in einer Draufsichtansicht einen kreisförmig ausgebildeten ersten Bereich auf. Von diesem ersten Bereich ausgehend erstreckt sich mindestens ein zweiter Bereich nach außen weg, der am Außenrand von der Mitte der Stützscheibe aus betrachtet eine Außenabmessung aufweist, die betragsmäßig größer ist als der Durchmesser des ersten Bereichs.

Obwohl vorstehend von einer Stützscheibe mit einem kreisförmig ausgebildeten ersten Bereich gesprochen wurde, kann diese Stützscheibe auch eine von der Kreisform abweichende Außenkonfiguration aufweisen, also beispielsweise rechteckförmig, in der Form eines Mehrecks, oval, als Ellipsoid oder dergleichen ausgebildet sein. Vom Außenumfangsbereich des ersten Bereichs erstreckt sich dann ein zweiter Bereich oder eine zweite Erstreckung in Richtung nach außen weg, dessen Außenrand von der Mitte oder dem Zentrum der Stützscheibe aus betrachtet einen größeren Abstand zur Mitte oder dem Zentrum besitzt. Dieser zweite Bereich weist dann in Außenumfangsrichtung des ersten Bereichs eine geringere Erstreckung auf als der Außenumfangsbereich des ersten Bereichs.

Bei dem zweiten Bereich kann es sich beispielsweise um einen sich vom ersten Bereich in der Form eines Flügels oder Lappens weg erstreckenden Bereich handeln. An dem Außenumfangsbereich des ersten Bereichs kann mehr als ein solcher zweiter Bereich vorgesehen sein, beispielsweise also zwei solche zweiten Bereiche, welche sich von der Mitte oder dem Zentrum der Stützscheibe aus betrachtet einander gegenüberliegen oder auch winkelig zueinander versetzt sind.

Es ist nach einer Weiterbildung der Erfindung auch vorgesehen, dass die Stützscheibe mindestens zwei sich radial nach außen erstreckende, einander gegenüberliegende Auskragungen aufweist, welche von der Mitte der Stützscheibe aus betrachtet eine Radialerstreckung kleiner oder gleich dem Außendurchmesser der Ventilscheibe aufweisen.

Mit einer solchen Konfiguration wird erreicht, dass die an der Stützscheibe aufliegende Ventilscheibe im Bereich des ersten Bereichs der Stützscheibe bei einer Kraftbeaufschlagung durch Dämpfungsfluid in Richtung zur Stützscheibe vom ersten Bereich abgestützt wird, und auch die Bereiche der Ventilscheibe, welche an den Auskragungen der Stützscheibe aufliegen, von der Stützscheibe abgestützt werden, wohingegen diejenigen Bereiche der Ventilscheibe, welche außerhalb des ersten Bereichs der Stützscheibe liegen und auch nicht auf den Auskragungen der Stützscheibe aufliegen, sich bei einer Kraftbeaufschlagung durch Dämpfungsfluid weitgehend frei verformen oder durchbiegen können. Diese sich verformenden oder durchbiegenden Bereiche der Ventilscheibe liegen dann auch nicht mehr an einer Dichtfläche an, an denen die sich nicht durchbiegenden Bereiche der Ventilscheibe noch anliegen.

Dadurch, dass sich auf diese Weise die Ventilscheibe nur entlang eines Teilbereichs ihres Außenumfangs von der Dichtfläche abhebt, findet ein Volumenstrom an Dämpfungsfluid entlang der sich von der Dichtfläche abhebenden Bereiche statt. Die Ventilscheibe nimmt also eine Konfiguration ähnlich einer gewölbten Federscheibe an.

Es ist nach einer Weiterbildung der Erfindung vorgesehen, dass die Ventilanordnung mindestens eine Auflagerscheibe aufweist, an der die Stützscheibe mit ihrer von der Ventilscheibe abgewandten Seite aufliegt.

Diese Auflagerscheibe ist steifer ausgebildet als die Ventilscheibe und/oder die Stützscheibe, sodass die Stützscheibe durch die Auflagerscheibe bei einer Druckbeaufschlagung der Ventilscheibe in Richtung der Stützscheibe durch die Auflagerscheibe abgestützt wird. Die Auflagerscheibe nimmt also die Druckkraft auf, welche durch die Druckbeaufschlagung der Ventilscheibe mit Dämpfungsdruck in Richtung der Stützscheibe auf die Ventilscheibe und damit die Stützscheibe wirkt. Mit der Auflagerscheibe wird auch eine Überlastung der Ventilscheibe und/oder der Stützscheibe vermieden, da sich die nicht von der Stützscheibe unterstützten Bereiche der Ventilscheibe bei einer Druckbeaufschlagung nur soweit in Richtung zur Auflagerscheibe verbiegen oder verformen können, bis die gebogenen oder verformten Bereiche der Ventilscheibe an der biegesteif ausgebildeten Auflagerscheibe in Anlage kommen.

Die Ventilscheibe ist biegeweich ausgebildet, sodass sie sich im Bereich der Freistellung oder der Freistellungen der Stützscheibe bei einem Anstieg des Dämpfungsdrucks leicht verformen kann und einen Spaltraum oder Spalträume zum Durchtritt von Dämpfungsfluid freigeben kann. In Abhängigkeit der Geschwindigkeit der Bewegung der Kolbenstange kann der die Ventilscheibe beaufschlagende Dämpfungsdruck hohe Werte aufweisen, was zu einer etwaigen Überbelastung der biegeweichen Ventilscheibe führen könnte.

Da sich die Ventilscheibe aber über die Stützscheibe an der Auflagerscheibe abstützt, wobei auch mehr als eine Auflagerscheibe zur Abstützung der Stützscheibe und damit der Ventilscheibe vorgesehen sein können, wird erreicht dass sich die Ventilscheibe nicht in einer über das vorbestimmte Maß hinaus verformt, wenn der Dämpfungsdruck hohe Werte aufnimmt. Darüber hinaus wird durch diese Konfiguration auch eine etwaige Beschädigung der biegeweichen Ventilscheibe durch hohen Dämpfungsdruck vermieden.

Es ist nach einer Weiterbildung der Erfindung auch vorgesehen, dass die Ventilanordnung einen rohrstückförmigen Hülsenkörper aufweist, der entlang eines Teilbereichs seiner Längserstreckung einen die Wandung des Hülsenkörpers mit einander gegenüberliegenden Ausnehmungen ausbildenden Schlitz aufweist und zu den Ausnehmungen benachbarte und sich von einem Boden des Hülsenkörpers weg erstreckende und in Längsrichtung des Hülsenkörpers verlaufende zylinderförmige Rohrsegmente ausgebildet sind.

Der Hülsenkörper weist also eine rohrstückförmige Konfiguration auf mit einem Boden an einem stirnseitigen Endbereich des zylinderförmig ausgebildeten Rohrstücks. Etwa vom Bereich des Bodens aus oder im Abstand zum Boden beginnend weist der zylinderförmige Rohrstückkörper zwei einander gegenüberliegende Ausnehmungen auf, welche in einer Draufsichtansicht also als rechteckförmige Aussparungen ausgebildet sind, die einander gegenüberliegend beidseits die Wand oder Wandung des Rohrstückkörpers durchbrechen und sich vom Boden ausgehend oder im Abstand zum Boden ausgehend bis zum gegenüberliegenden Stirnseitenendbereich des Rohrstückkörpers erstrecken.

Auf diese Weise werden zwei langestreckte Rohrstücksegmente erzeugt, welche einander gegenüberliegend angeordnet sein können und wodurch die beiden Aussparungen im Abstand zueinander angeordnet sind.

Es ist nach einer Weiterbildung der Erfindung vorgesehen, dass die Ventilscheibe und/oder die Stützscheibe innerhalb des Außenumfangs mit zwei Ausnehmungen versehen ist, zwischen denen ein Mittelsteg ausgebildet ist, wobei die Ausnehmungen von den Rohrsegmenten durchsetzt sind.

Durch diese Konfiguration wird erreicht, dass die Ventilscheibe mit den beiden Ausnehmungen auf den Hülsenkörper aufgesetzt werden kann, sodass der Mittelsteg die beiden Ausnehmungen des Hülsenkörpers durchsetzt und die Ventilscheibe und/oder die Stützscheibe über einen körperlichen Kontakt zwischen den beiden Rohrsegmenten und innenliegenden Umfangsbereichen der Ausnehmungen verdrehsicher geführt wird. Zudem werden die Scheiben von dem Führungsstift radial geführt. Diese radiale Führung sorgt dafür, dass sich die Ventilscheibe und/oder die Stützscheibe bei einer Druckbeaufschlagung durch Dämpfungsdruck sowohl über die Anlageflächenseite als auch über die Auflageflächenseite nicht relativ zum Führungsstift und/oder Hülsenkörper verkantet, sondern an diesem zwar axial beweglich geführt angeordnet ist, radial aber geführt vorliegt und keine zur Verkantung führende Schrägstellung relativ zu einer Längsachse des Hülsenkörpers einnimmt. In ähnlicher Weise verkantet sich durch diese radial innenliegende Führung auch die Stützscheibe und/oder die Auflagerscheibe bei der entsprechenden Druckbeaufschlagung nicht relativ zur Längsachse des Hülsenkörpers.

Dadurch sind sowohl die Ventilscheibe als auch die Stützscheibe als auch die Auflagerscheibe an dem Hülsenkörper radial geführt und können sich relativ zur Längsachse des Hülsenkörpers weder verkanten noch verkippen, sodass die Gefahr einer Schrägstellung der Ventilscheibe und/oder der Stützscheibe relativ zur Längsachse des Hülsenkörpers bei einer Druckbeaufschlagung vermieden ist.

Es ist nach einer Weiterbildung der Erfindung auch vorgesehen, dass das Pilotventil einen mit einem Außenkonus versehenen Dichtkörper aufweist, welcher mittels einer Feder beaufschlagt an einem ringförmigen Ventilsitz eines Ablaufventils in Anlage bringbar ist.

Mit dieser Konfiguration kann in einer unbestromten Stellung des Elektromagneten der Dichtkörper an dem ringförmigen Ventilsitz des Ablaufventils in Anlage gebracht werden. Hierzu ist eine Scheibenfeder vorgesehen, welche den Dichtkörper auf den ringförmigen Ventilsitz drückt.

Wird der Elektromagnet bestromt, dann kann der Ventilkörper gegen die Wirkung der Scheibenfeder in eine das Ablaufventil öffnende Stellung verbracht werden, sodass ein Fluidstrom an Dämpfungsfluid aus der Vorsteuerkammer über das Ablaufventil ermöglicht ist.

Es ist nach einer Weiterbildung der Erfindung auch vorgesehen, dass das Pilotventil eine Ventilscheibe aufweist, welche im unbestromten Zustand des Elektromagneten einen Fluidstrom aus einer Vorsteuerkammer des Pilotventils über das Ventilgehäuse ermöglicht.

Wenn sich der Elektromagnet des Pilotventils in einer unbestromten Stellung befindet, kann mittels dieser Konfiguration eine Sicherheitsstellung des Pilotventils herbeigeführt werden. Der Dichtkörper liegt dann nämlich mit seinem Außenkonus an dem ringförmigen Ventilsitz des Ablaufventils des Pilotventils an, sodass der Ablauf von Dämpfungsfluid über das Ablaufventil verhindert ist. In einer solchen Stellung wird dann das Dämpfungsfluid in Richtung zu einer an einem Ventilsitz anliegenden Ventilscheibe, also einer Notlaufventilscheibe geführt, welche vom Systemdruck des Dämpfungsfluids geöffnet wird, sodass das Dämpfungsfluid ablaufen kann und sich kein über den vorbestimmten Öffnungsdruck der Notlaufventilscheibe hinausgehender Systemdruck einstellen kann. Mit dieser Konfiguration kann also eine Notlaufstellung des Pilotventils und damit der Ventilanordnung erreicht werden.

Es ist nach einer Weiterbildung der Erfindung auch vorgesehen, dass die Ventilscheibe eine Innenausnehmung aufweist, welche einen größeren Durchmesser aufweist als die in Hochachsrichtung der Ventilanordnung darunter angeordnete Stützscheibe und sich der Randbereich der Innenausnehmung bei einer Druckbeaufschlagung mit Dämpfungsfluid in Richtung aus dem Innenraum des Ventilgehäuses heraus von der Stützscheibe abhebt.

Mit dieser Konfiguration wird erreicht, dass bei einem Druckanstieg im Ventilgehäuse bei einer Ausfederbewegung oder Reboundbewegung des mit der erfindungsgemäßen Ventilanordnung versehenen Schwingungsdämpfers schon bei einer niedrigen Geschwindigkeit der Kolbenstange ein erster, kleiner Volumenstrom an Dämpfungsfluid aus der Zugstufenkammer in Richtung zur Druckstufenkammer strömen kann und somit bereits bei einer niedrigen Geschwindigkeit der Kolbenstange Dämpfungsarbeit verrichtet wird und zwar zu einem Zeitpunkt, zu dem der Druck in der Druckstufenkammer noch zu gering ist, um eine Verlagerungsbewegung des Hauptkolbens und des damit gekoppelten Hauptventils der Ventilanordnung herbeizuführen.

Auf diese Weise kann auch bei einer Ausfederbewegung oder Reboundbewegung die vorstehend geschilderte Problematik der Überschwingbewegung mit nachfolgender oszillierender Bewegung des Hauptventils beziehungsweise des Hauptkolbens verhindert werden.

Es ist einer Weiterbildung der Erfindung auch vorgesehen, dass die Ventilscheibe einen am Außendurchmesser angeordneten Randbereich aufweist, welcher sich bei einer Druckbeaufschlagung mit Dämpfungsfluid in Richtung des Innenraums vom Ventilsitz in Richtung in den Innenraum abhebt.

Diese Abhubbewegung der Ventilscheibe vom Ventilsitz führt bei einer niedrigen Kolbenstangengeschwindigkeit dazu, dass Dämpfungsarbeit verrichtet wird noch weit vor dem Zeitpunkt, zu dem sich die Ventilscheibe aufgrund einer hohen Kolbenstangengeschwindigkeit vom Ventilsitz vollständig abhebt.

Die Erfindung schafft auch einen Schwingungsdämpfer mit einem Rohr und einer Kolbenstange, wobei das Rohr einen zur Aufnahme des Dämpfungsfluids ausgebildeten Innenraum aufweist und der Schwingungsdämpfer eine Ventilanordnung aufweist, die vorstehend erläutert wurde und der Schwingungsdämpfer eine Druckstufenkammer sowie eine Zugstufenkammer besitzt, wobei die beiden Kammern einen jeweiligen Innenraum aufweisen, der von der Ventilanordnung körperlich getrennt wird. Die erfindungsgemäße Ventilanordnung trennt also die beiden Kammern körperlich, beide Kammern sind aber über die Ventilanordnung fluidisch miteinander verbunden, also zum Fluidaustausch über die Ventilanordnung ausgebildet.

Schließlich schafft die Erfindung auch ein Fahrzeug mit mindestens einem Vorderrad und mindestens einem Hinterrad, wobei das Fahrzeug einen Schwingungsdämpfer aufweist, der vorstehend beschrieben wurde.

Die Erfindung wird im Folgenden anhand der Zeichnung näher erläutert. Diese zeigt in:
Fig. 1 eine Schnittdarstellung eines Teleskopfedergabelbeins eines Motorrads mit einer Ausführungsform einer Ventilanordnung gemäß der vorliegenden Erfindung;
Fig. 2 eine vergrößerte Darstellung des Ausschnitts II nach Fig. 1;
Fig. 3 eine Schnittansicht der Ventilanordnung nach der Ausführungsform gemäß Fig. 1 ;
Fig. 4 eine vergrößerte Darstellung des Ausschnitts A nach Fig. 3;
Fig. 5 eine vergrößerte Darstellung des Ausschnitts B nach Fig. 3;
Fig. 6 eine Draufsichtansicht auf eine Stützscheibe der Ventilanordnung nach einer ersten Ausführungsform;
Fig. 7 eine Draufsicht auf eine Stützscheibe der Ventilanordnung nach einer zweiten Ausführungsform;
Fig. 8 eine vergrößerte Schnittansicht der Ventilanordnung zur Darstellung der Fluidströmung in der Druckstufe bei niedriger Geschwindigkeit der Kolbenstange;
Fig. 8a eine vergrößerte Darstellung des Ausschnitts III nach Fig. 8;
Fig. 9 eine vergrößerte Schnittansicht der Ventilanordnung zur Darstellung der Fluidströmung in der Druckstufe bei hoher Geschwindigkeit der Kolbenstange;
Fig. 10 eine vergrößerte Schnittansicht der Ventilanordnung zur Darstellung der Fluidströmung in der Zugstufe bei niedriger Geschwindigkeit der Kolbenstange;
Fig. 11 eine vergrößerte Schnittansicht der Ventilanordnung zur Darstellung der Fluidströmung in der Zugstufe bei hoher Geschwindigkeit der Kolbenstange;
Fig. 12 eine vergrößerte Darstellung eines Ausschnitts des Pilotventils zur Erläuterung dessen Notlauffunktion;
Fig. 13 eine Explosionsdarstellung der Ventilanordnung nach einer Ausführungsform gemäß der vorliegenden Erfindung;
Fig. 14 eine Seitenansicht eines Motorrads mit der Ventilanordnung nach der Erfindung;
Fig. 15 ein Diagramm zur Erläuterung des Verlaufs des Volumenstroms an Dämpfungsfluid und des Druckverlaufs aufgetragen über der Zeit; und
Fig. 16 ein Diagramm der Dämpferkraft aufgetragen über der Geschwindigkeit der Kolbenstange.

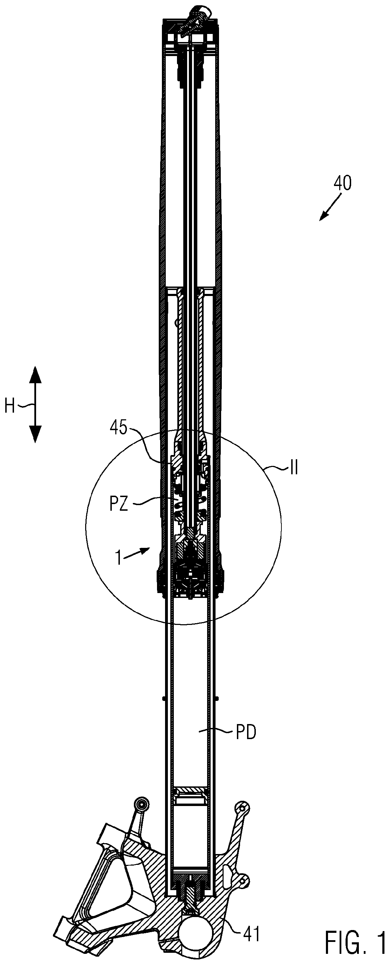

Fig. 1 der Zeichnung zeigt in einer Schnittdarstellung ein Teleskopfedergabelbein 40 eines Motorrads 80 nach einer Ausführungsform der Ventilanordnung 1.

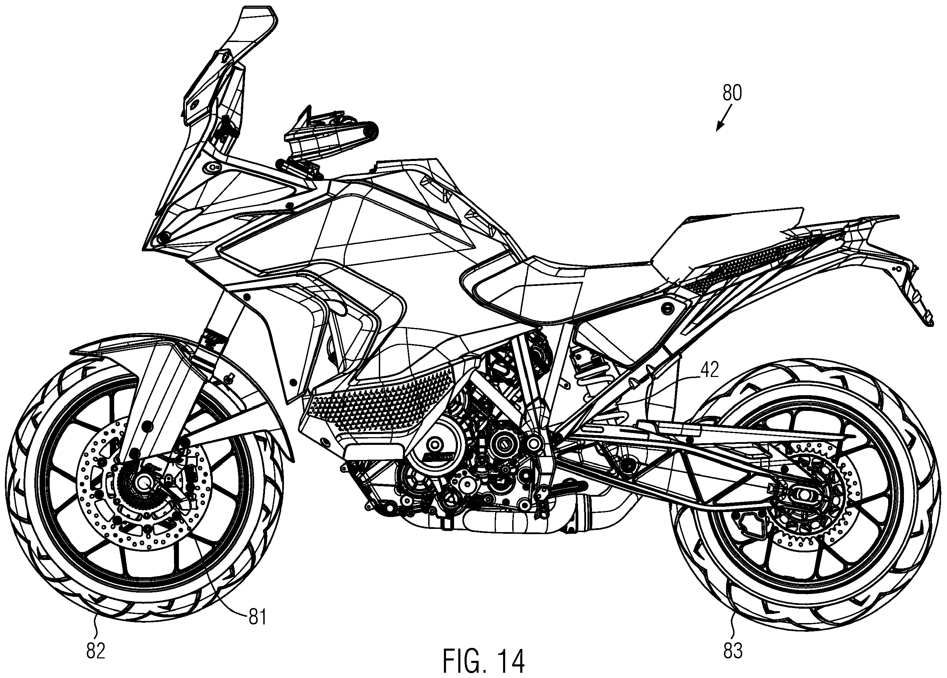

Das Teleskopfedergabelbein 40 besitzt am in der Zeichnung der Fig. 1 unteren Ende eine Klemmfaust 41 zur Aufnahme einer Steckachse 81 des in Fig. 14 der Zeichnung dargestellten Vorderrads 82 des Motorrads 70.

Bei dem Teleskopfedergabelbein 40 handelt es sich um ein in Upside-Down-Konfiguration ausgebildetes Teleskopfedergabelbein, bei dem die Druckstufenkammer PD in Hochachsrichtung H Teleskopfedergabelbeins 40 unterhalb der Ventilanordnung 1 angeordnet ist und die Zugstufenkammer PZ oberhalb der Ventilanordnung 1 angeordnet ist. Die Ventilanordnung 1 kann auch in einem nicht näher dargestellten Teleskopfedergabelbein eingesetzt werden, bei dem die Druckstufenkammer PD in Hochachsrichtung H oberhalb der Ventilanordnung und Zugstufenkammer PZ unterhalb der Ventilanordnung 1 angeordnet ist.

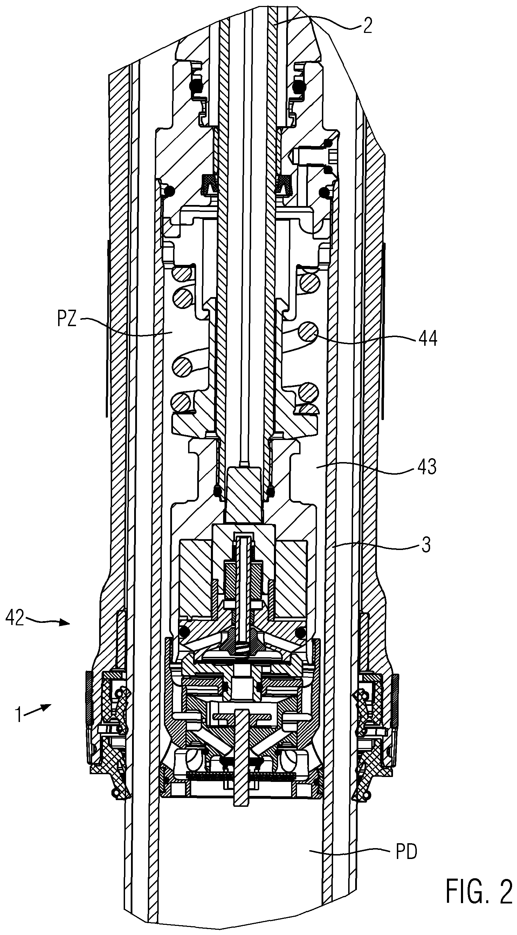

Fig. 1 der Zeichnung zeigt auch einen Ausschnitt II, welcher näher anhand von Fig. 2 der Zeichnung dargestellt ist.

Die Ventilanordnung 1 kann also beispielsweise an einem als Teleskopfedergabelbein 40 ausgebildeten Schwingungsdämpfer 42 zum Einsatz kommen, wie er in Fig. 2 der Zeichnung näher dargestellt ist. Der Schwingungsdämpfer 42 weist ein Rohr 3 und eine Kolbenstange 2 auf, die in einem Innenraum 43 des Rohrs 3 zusammen mit der Ventilanordnung 1 angeordnet ist. Der Innenraum 43 ist zur Aufnahme eines nicht näher dargestellten Dämpfungsfluids ausgebildet, bei dem es sich bei der dargestellten Ausführungsform um Gabelöl handelt.

Wie es anhand von Fig. 2 der Zeichnung ersichtlich ist, werden die Zugstufenkammer PZ und die Druckstufenkammer PD von der Ventilanordnung 1 körperlich getrennt und sind aber über die Ventilanordnung 1 zum Austausch von Gabelöl, also zum Fluidaustausch von Dämpfungsfluid fluidisch verbunden.

Die Ventilanordnung 1 stützt sich über eine Feder 44 an einem anhand von Fig. 1 und 2 der Zeichnung ersichtlichen Widerlager 45 ab.

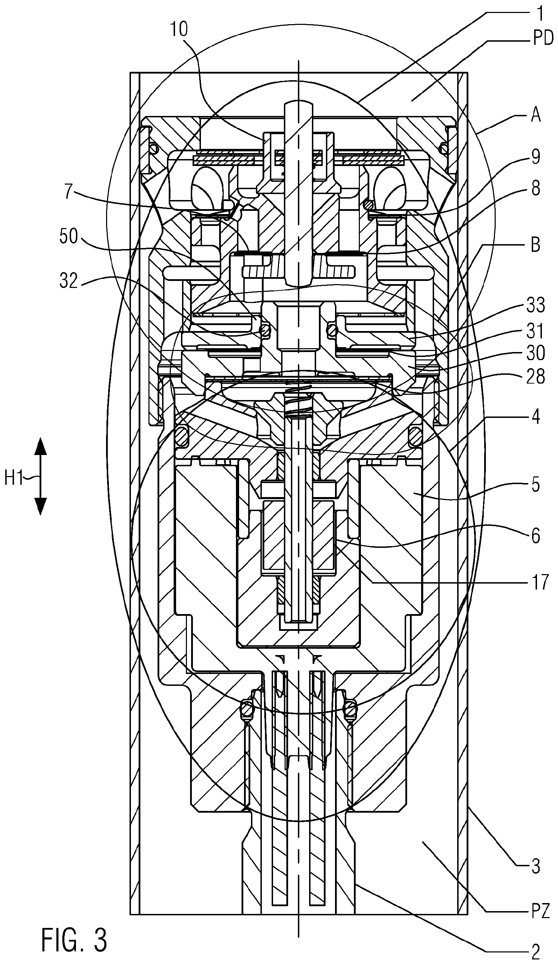

Nachfolgend wird näher auf Fig. 3 der Zeichnung eingegangen, welche die Ventilanordnung 1 und weitere Bauteile zeigt und zwar in einer zur Erleichterung der Darstellung und Erläuterung um verglichen zur Einbaulage der Ventilanordnung 1 im Teleskopfedergabelbein 40 um 180 Grad gedrehten Stellung.

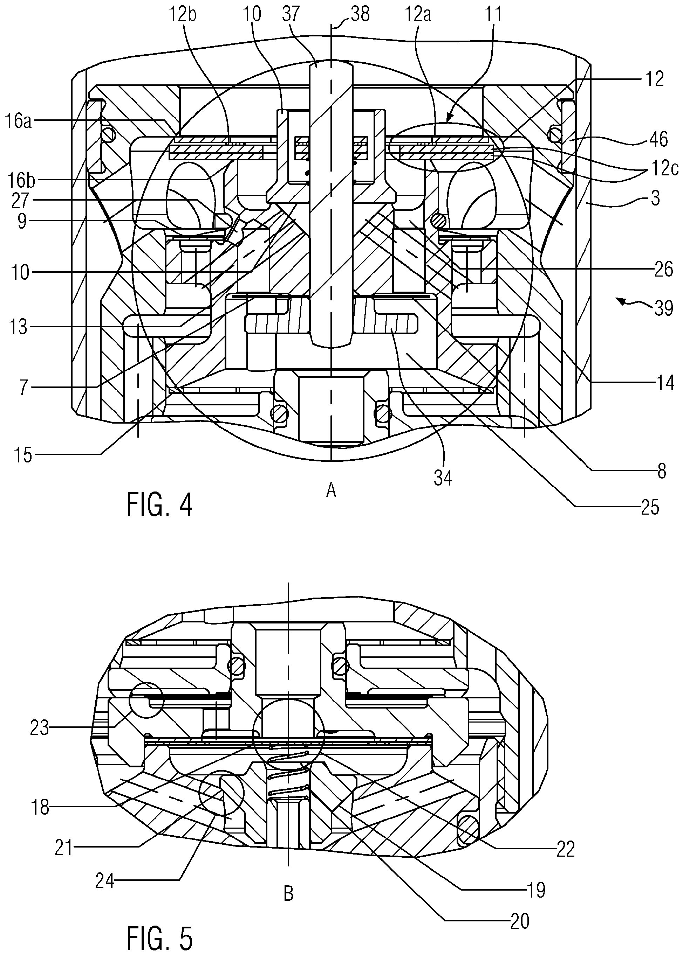

Dabei wird auch auf die Einzelheiten A und B eingegangen, welche in Fig. 4 und 5 der Zeichnung näher dargestellt sind, wobei die Einzelheit A Elemente der Ventilanordnung 1 und die Einzelheit B Elemente des an der Ventilanordnung 1 vorgesehenen Pilotventils B zeigt.

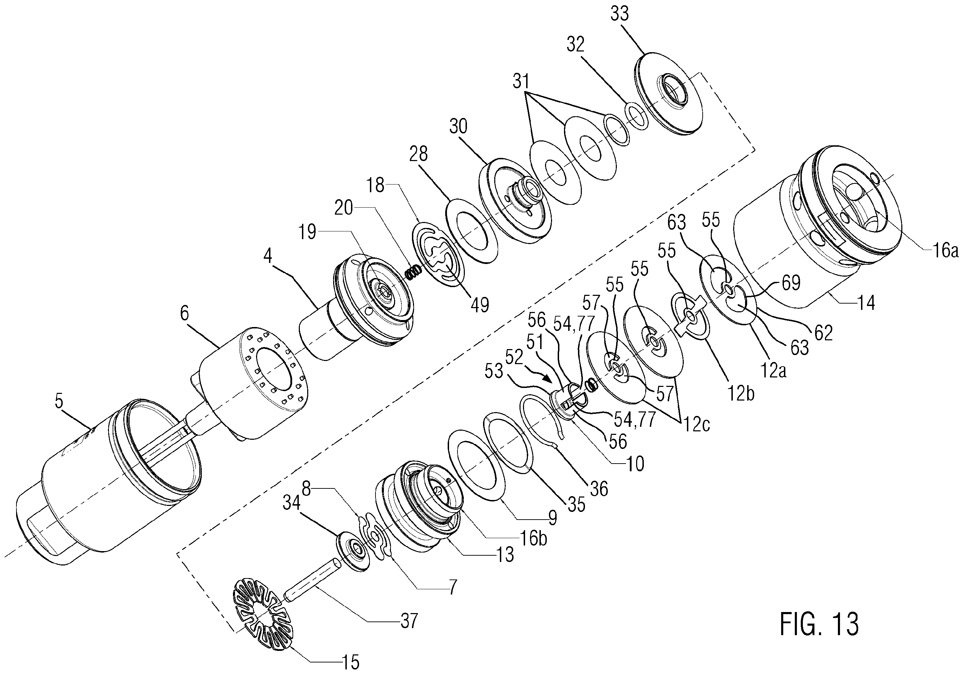

Die Ventilanordnung 1 weist einen ringförmigen Ventilsitz 16a auf und besitzt ein Ventilgehäuse 14, welches zur Aufnahme von Dämpfungsfluid in der Form des vorstehend erwähnten Gabelöls ausgebildet ist. Darüber hinaus weist die Ventilanordnung 1 einen Ventilkolben 13 auf, an dem ein Hauptventil 11 mit Ventilscheiben 12 angeordnet ist, welches die anhand von Fig. 13 ersichtlichen Ventilscheiben 12a, 12b und 12c umfasst.

Die Ventilscheibe 12c oder Auflagerscheibe 12c stützt sich an einem ringförmigen Ventilsitz 16b ab, der an einer Oberseite des Ventilkolbens 13 angeordnet ist.

Die Ventilanordnung 1 weist einen Durchlass 27 auf, der als Vordrossel der Zugstufe wirkt und besitzt auch einen Durchlass 26, der als Vordrossel der Druckstufe wirkt.

Die Ventilscheiben 12 sind an einem Führungsstift 37 angeordnet und zwar relativ zum Ventilkolben 13 axial bewegbar und radial geführt, wobei zu diesem Zweck ein näher anhand von Fig. 13 der Zeichnung ersichtlicher Hülsenkörper 10 vorgesehen ist, an dem die Ventilscheiben 12 radial geführt werden, sodass sie sich relativ zur Längsachse 38 des Führungsstifts 37 und damit relativ zur Längsachse 38 der Ventilanordnung 1 nicht verkanten können.

Die Ventilanordnung 1 weist darüber hinaus mehrere Rückschlagventile 7, 8, 9, 10 auf, auf die nachfolgend noch eingegangen wird, wobei bereits an dieser Stelle erwähnt wird, dass der Hülsenkörper 10 auch als Rückschlagventil wirkt.

Die Ventilanordnung 1 weist auch eine Scheibenfeder 15 auf, welche mäandrierend ausgebildet ist, wie dies anhand der Darstellung nach Fig. 13 der Zeichnung ersichtlich ist.

Der Ventilkolben 13 ist in einem Innenraum 39 des Ventilgehäuses 14 axial verschiebbar angeordnet und im Innenraum 39 ist auch eine Vorsteuerkammer 25 ausgebildet, in der ein Vorsteuerdruck oder Pilotdruck ausgebildet werden kann.

Der Führungsstift 37 ist an einer Anschlagscheibe 34 angeordnet und nimmt auch den geschlitzt ausgebildeten Hülsenkörper 10 auf, an dem die Ventilscheiben 12 radial geführt und axial verschiebbar aufgenommen sind.

Das Ventilgehäuse 14 ist in dem Rohr 3 des Schwingungsdämpfers 42 über eine Dichtungseinrichtung 46 radial abgestützt dichtend aufgenommen.

Fig. 5 der Zeichnung zeigt das Pilotventil B mit einem Dichtkörper 19, der bei der dargestellten Ausführungsform abschnittsweise kegelstumpfförmig ausgebildet ist und einen Außenkonus 47 aufweist, der über eine Feder 20 gegen einen ringförmigen Ventilsitz 21 eines Ablaufventils 24 gedrückt wird.

Fig. 3 der Zeichnung zeigt, dass das Pilotventil B einen Elektromagneten 4 aufweist, dessen Anker 17 über eine Strombeaufschlagung in Hochachsrichtung H1 verlagert werden kann und zwar entgegen der Wirkung der Ventilfeder 18.

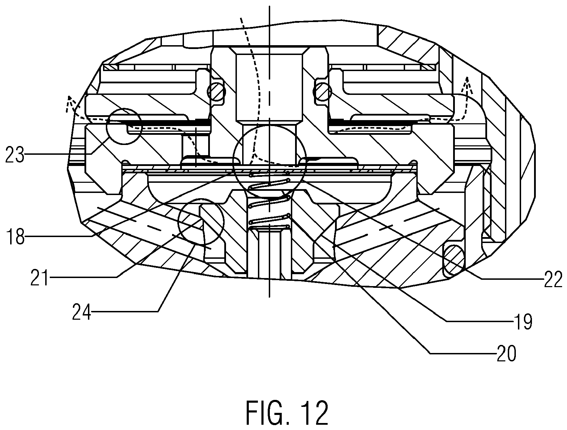

Wenn sich der Elektromagnet 4 in einer unbestromten Stellung befindet, die in Fig. 5 und Fig. 12 der Zeichnung dargestellt ist, dann kann sich ein im Innenraum 39 des Ventilgehäuses 14 einstellender Systemdruck nicht über den Ventilsitz 21 beziehungsweise das Ablaufventil 24 entspannen.

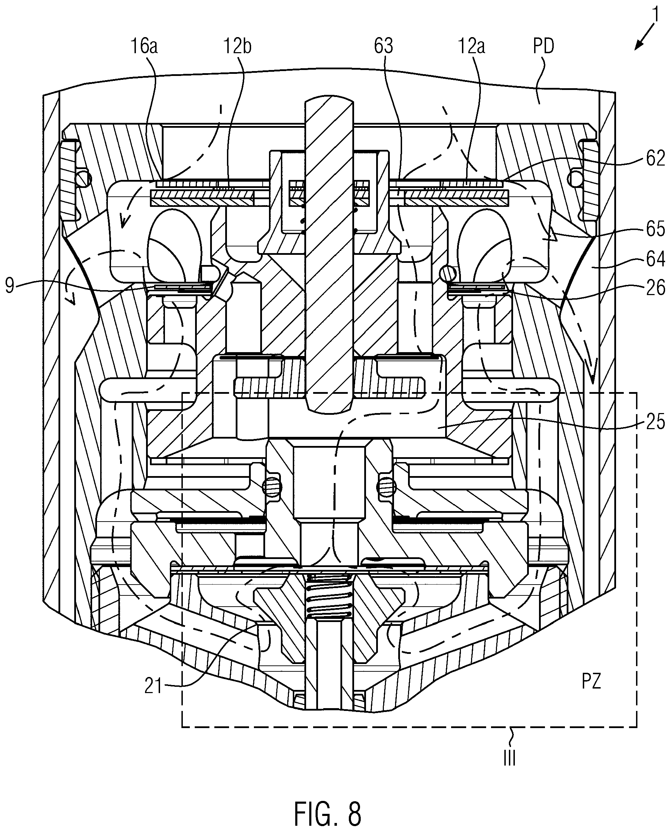

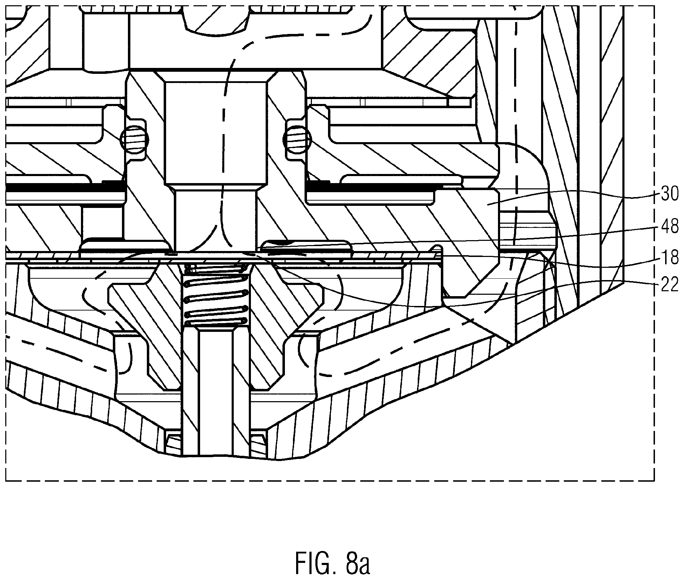

Das Pilotventil B weist ein Betriebsventil 22 auf, welches anhand von Fig. 8a ersichtlich ist und zwar als Durchlassöffnung zwischen einem Stützrand 48 eines Ventilsitzes 30 und der Ventilfeder 18. Wenn sich das Pilotventil B in der unbestromten Stellung befindet, findet über das Betriebsventil 22 eine vom Systemdruck induzierte Fluidströmung statt. Der Systemdruck sorgt über das inkompressible Gabelöl dafür, dass es zu einer in Fig. 12 der. Zeichnung gestrichelt dargestellten Fluidströmung kommt, da vom Systemdruck die Notlaufventilscheibe 23 geöffnet werden kann und es zu einer vorbestimmten Druckentspannung kommen kann.

In einem näher anhand von Fig. 3 und Fig. 13 ersichtlichen Gehäuse 5 ist eine Spule 6 angeordnet, über die der Anker 17 des Elektromagneten 4 so bestromt werden kann, dass die Ventilfeder oder Ventilscheibe 18 gegen ihre Federkraft geöffnet werden kann und auf diese Weise mit zunehmender Bestromung das Betriebsventil 22 gegen die Wirkung der Ventilfeder 18 stufenlos mehr verschlossen wird und dadurch einen höheren Druckabfall erzeugt.

Wenn der Elektromagnet 4 aus der unbestromten Stellung in eine mit einem Mindeststrom versorgte Stellung beaufschlagt wird, erzeugt der Anker 17 eine Schubkraft in Richtung des Pilotventils B und öffnet gegen die Wirkung der Kraft der Feder 20 das Ablaufventil 24, wodurch das von der Notlaufventilscheibe 23 gebildete Notlaufventil kurzgeschlossen wird.

Die in Fig. 13 ersichtliche Ventilfeder 18 weist eine Ausnehmung 49 auf, welche zum Durchtritt von Dämpfungsfluid (Gabelöl) vorgesehen ist. Der vorstehend erwähnte Ventilsitz 30 wird unter Zwischenschaltung einer Distanzscheibe 28 an der Ventilfeder 18 angeordnet. Unter Zwischenlage von Einstellscheiben 31 und eines O-Rings 32 befindet sich die Deckscheibe 33 angeordnet, welche sich an einem radial innenliegenden Bund 50 an der Federscheibe 15 abstützt.

Über Rückschlagventile 7, 8 und das Rückschlagventil 9 sowie dem auch als Rückschlagventil fungierenden Hülsenkörper 10 wird erreicht, dass unabhängig von der Bewegungsrichtung der Ventilanordnung 1, also unabhängig davon, ob eine Einfederbewegung oder eine Reboundbewegung des Schwingungsdämpfers 2 vorliegt, das Pilotventil B immer mit Dämpfungsfluid von der druckerzeugenden Seite versorgt wird und das Dämpfungsfluid auf die vom Druck abgewandte Seite abfließen kann.

Eine in Fig. 13 dargestellte Federscheibe 35 beaufschlagt das Rückschlagventil 9 und wird von einem Sicherungsring 36 festgelegt.

Der in Fig. 4 ersichtliche Hülsenkörper 10 ist anhand von Fig. 13 perspektivisch ersichtlich dargestellt.

Wie es anhand von Fig. 13 der Zeichnung ohne weiteres ersichtlich ist, besitzt der Hülsenkörper 10 eine rohrstückförmige Konfiguration mit einer Wandung 51, welche von einem hohlzylinderförmig ausgebildeten Körper 52 gebildet wird, der an einem kreisförmig ausgebildeten Boden 53 mit einer Stirnfläche aufsitzend angeordnet ist und gegenüberliegende Ausnehmungen 54 aufweist, die in einer jeweiligen Draufsichtansicht rechteckförmig ausgebildet sind und einen jeweiligen Schlitz 77 ausbilden.

Die rechteckförmigen Ausnehmungen 54 beziehungsweise Schlitze 77 dienen zur Aufnahme eines jeweiligen Mittelstegs 55 der in Fig. 13 ebenfalls dargestellten Ventilscheibe 12a, der Stützscheibe 12b und der beiden Auflagerscheiben 12c. Die jeweiligen Mittelstege 55 werden dabei in den Ausnehmungen 54 aufgenommen und stützen sich über die Feder 29 am Boden 53 des Hülsenkörpers 10 ab.

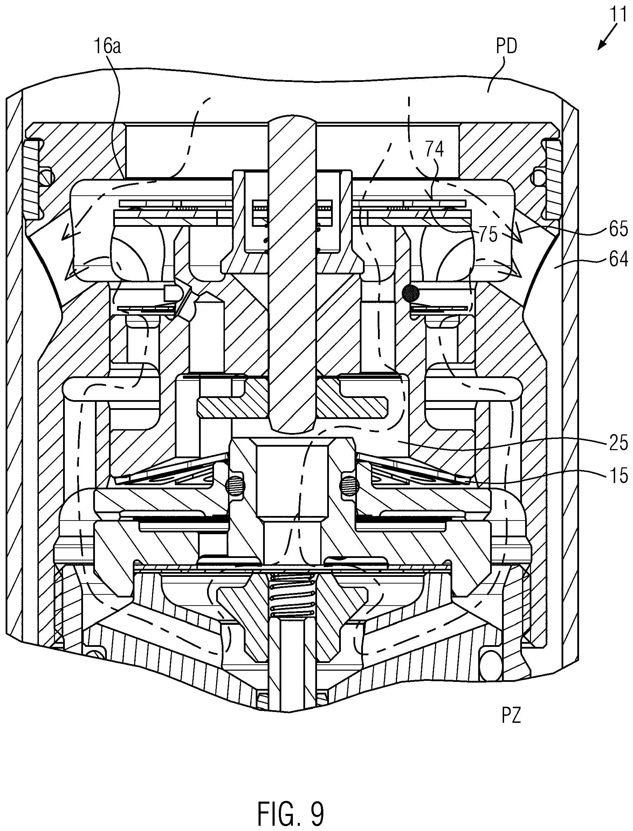

Die Ventilscheibe 12a weist eine Anlageflächenseite 74 auf, wie dies beispielsweise anhand von Fig. 9 der Zeichnung ersichtlich ist und auch eine der Anlageflächenseite 74 gegenüberliegende Auflageflächenseite 75, welche ebenfalls in Fig. 9 der Zeichnung dargestellt ist, wobei die Ventilscheibe 12a mit der Auflageflächenseite 75 an der darunter angeordneten Stützscheibe 12b bereichsweise aufliegt.

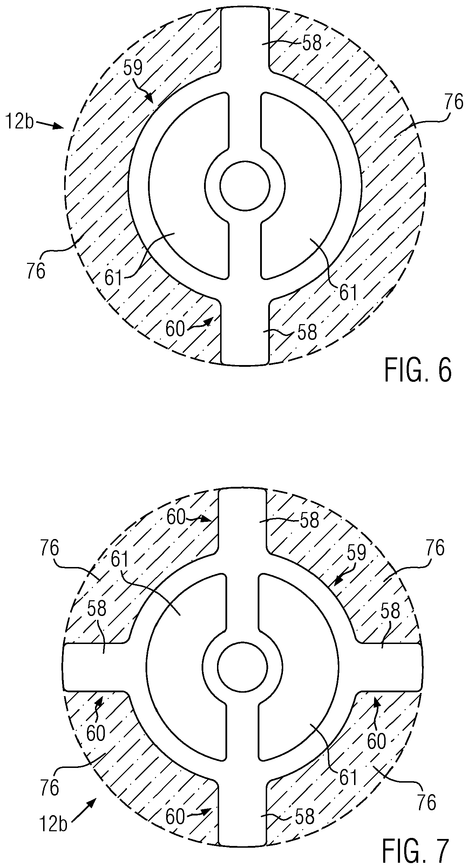

Die Stützscheibe 12b kann die Ventilscheibe 12a im Bereich der Freistellungen 76 der Stützscheibe 12b nicht unterstützen. Die Freistellungen 76 sind bei der in Fig. 6 und Fig. 7 der Zeichnung dargestellten Stützscheibe 12b strichpunktiert schraffiert dargestellten Bereiche. Die Bereiche also, an denen die Stützscheibe 12b die Ventilscheibe 12a nicht abstützt.

Beidseits der Ausnehmungen 54 ist die Wandung 51 in der Form zweier zylinderförmiger Rohrsegmente ausgebildet, die sich von dem Boden 53 im rechten Winkel zu diesem weg erstrecken.

Die beiden Auflagerscheiben 12c sind biegesteif ausgebildet und besitzen zwei Ausnehmungen 57, welche zur Aufnahme der Rohrsegmente 56 des Hülsenkörpers 10 vorgesehen sind. Darüber hinaus kann durch die beiden Ausnehmungen 57 auch Dämpfungsfluid strömen.

Die in Fig. 13 dargestellte Stützscheibe 12b ist anhand von zwei Ausführungsformen in Fig. 6 und Fig. 7 der Zeichnung vergrößert dargestellt.

Fig. 6 der Zeichnung zeigt dabei eine erste Ausführungsform der Stützscheibe 12b mit zwei Auskragungen 58, während Fig. 7 der Zeichnung eine zweite Ausführungsform der Stützscheibe 12b mit vier Auskragungen 58 zeigt.

Die in einer jeweiligen Draufsichtansicht dargestellte Stützscheibe 12b besitzt einen in einer Draufsichtansicht kreisförmig ausgebildeten ersten Bereich 59 und bei der Darstellung nach Fig. 6 zwei sich vom Außenumfang des ersten Bereichs 59 radial nach außen gerichtet erstreckende zweite Bereiche 60, welche bei der dargestellten Ausführungsform als Auskragungen oder Flügel 58 ausgebildet sind.

In ähnlicher Weise besitzt die in Fig. 7 dargestellte Stützscheibe 12b nach der zweiten Ausführungsform einen ersten kreisförmigen Bereich 59, von dem sich radial nach au-ßen gerichtet erstreckend vier zweite Bereiche 60 weg erstrecken, die jeweils als Auskragungen oder Flügel 58 ausgebildet sind.

Der jeweils erste Bereich 59 der Stützscheibe 12b weist einen geringeren Außendurchmesser auf, als die daran zur Anlage angeordnete Ventilscheibe 12a.

Dies ist einerseits anhand von Fig. 13 der Zeichnung ersichtlich und darüber hinaus beispielsweise auch anhand von Fig. 4 und den Figuren 8 bis 11 der Zeichnung.

Auch die Stützscheibe 12b besitzt Ausnehmungen 61, die von den zylinderförmigen Rohrsegmenten 56 des Hülsenkörpers 10 durchsetzt werden und darüber hinaus zum Durchtritt von Dämpfungsfluid ausgebildet sind.

Wie es ohne weiteres anhand von Fig. 13 der Zeichnung ersichtlich ist, besitzt die Ventilscheibe 12a am Außenumfangsbereich einen Randbereich 62, der zur Anlage an dem ringförmigen Ventilsitz 16a des Ventilgehäuses 14 vorgesehen ist und sich auch von diesem zur Ausbildung von Spalträumen zwischen der Ventilscheibe 12a und dem Ventilsitz 16a abheben kann und auch vollständig vom Ventilsitz 16a getrennt werden kann, wenn der Ventilkolben 13 axial in Richtung vom Ventilsitz 16a wegbewegt wird, wie dies nachfolgend noch näher erläutert werden wird.

Fig. 8 der Zeichnung zeigt eine vergrößerte Schnittansicht der Ventilanordnung 1 zur Darstellung der Fluidströmung in der Druckstufe bei niedriger Geschwindigkeit der Kolbenstange 2.

Wenn das mit der erfindungsgemäßen Ventilanordnung 1 versehene Motorrad 80 mit dem Vorderrad 82 eine Bodenunebenheit überfährt, dann führt dies zu einer Einfederbewegung des Teleskopfedergabelbeins 40. Je nachdem, welche Höhe die Bodenunebenheit aufweist und mit welcher Geschwindigkeit das Motorrad 80 bei der Fahrt über die Bodenunebenheit fuhr, können sich unterschiedliche Kolbenstangengeschwindigkeiten der Kolbenstange 2 einstellen. Der Schwingungsdämpfer 42 kann auch zur Bedämpfung von Bewegungen des Hinterrads 83 des Motorrads 80 eingesetzt werden.

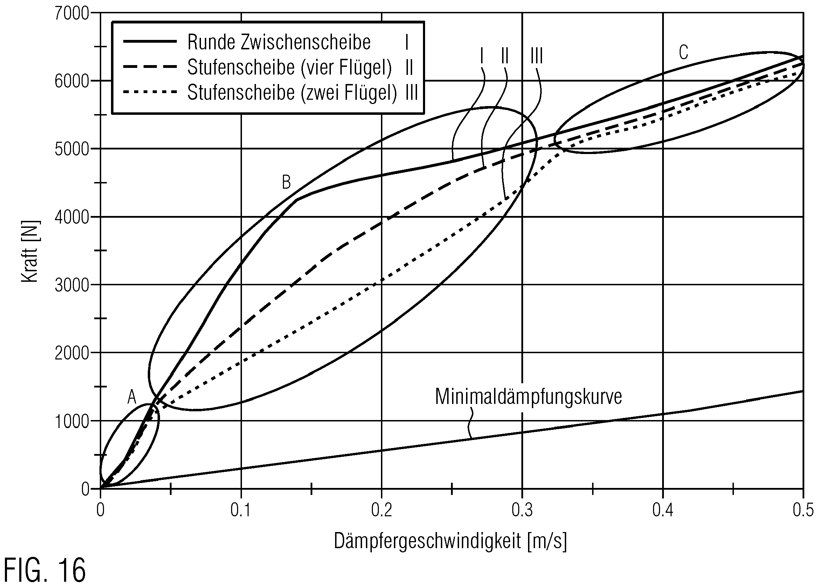

Die Kolbenstangengeschwindigkeit und die sich einstellende Dämpferkraft sind in dem Diagramm nach Fig. 16 der Zeichnung ersichtlich, wobei dies qualitative Angaben sind.

Eine Einteilung der Geschwindigkeit der Kolbenstange 2 ist wie folgt möglich:
- niedrige Geschwindigkeit im Bereich von 0 bis 0,05 m/s
- mittlere Geschwindigkeit im Bereich von 0,05 bis 0,3 m/s
- hohe Geschwindigkeit im Bereich von 0,3 bis 1,5 m/s

Die an der Kolbenstange 2 befestigte Ventilanordnung 1 bewegt sich innerhalb des mit Dämpfungsfluid in der Form von beispielsweise Gabelöl befüllten Rohrs 3 hin und her.

Die Ventilanordnung 1 umfasst auch den vorstehend beschriebenen Elektromagnet 4 und die beispielsweise in Fig. 4 dargestellte Ventilanordnung 1 wird bei einer Bewegung sowohl in Druckrichtung als auch in Zugrichtung vom Dämpfungsfluid durchströmt. Die Bewegung in Druckrichtung stellt sich dann ein, wenn der lediglich der Erläuterung halber als Teleskopfedergabelbein 40 ausgebildete Schwingungsdämpfer 42 eine Einfederbewegung erfährt, während die Bewegung in Zugrichtung sich dann einstellt, wenn der Schwingungsdämpfer 42 eine Ausfederbewegung oder Reboundbewegung erfährt. Der Begriff der Druckstufe entspricht dabei dem sich bei der Einfederbewegung einstellenden Zustand, während der bewegte Zugstufe dem sich bei der Ausfederbewegung einstellenden Zustand entspricht.

Mithilfe des Elektromagneten 4 kann über eine entsprechende Verlagerungsbewegung der Ventilscheibe 18 der Druckabfall in beiden Bewegungsrichtungen beeinflusst werden.

Dabei wird jeweils ein Teil des sich durch die jeweilige Bewegung einstellenden Ölstroms dem Pilotventil B zugeführt, welches von dem Elektromagneten 4 beaufschlagt wird. Das vorstehend bereits geschilderte System aus vier Rückschlagventilen 7, 8, 9, 10 ermöglicht es, dass das Pilotventil B immer mit Dämpfungsfluid von der druckerzeugenden Seite versorgt wird und das Dämpfungsfluid auf die vom Druck abgewandte Seite abströmen kann.

Der vom Pilotventil B erzeugte Vorsteuerdruck wirkt auf die rückseitige Fläche des Hauptventils 11 und beeinflusst so den sich am Hauptventil 11 beziehungsweise der Ventilanordnung 1 einstellenden Druckabfall. Der Ventilkolben 13 ist gegenüber dem Ventilgehäuse 14 mit einer hydraulischen Passung abgedichtet und wird dadurch radial geführt und axial gelagert. Darüber hinaus wird der Ventilkolben 13 mittels der Scheibenfeder oder Federscheibe 15 gegen den Ventilsitz 16a im Ventilgehäuse 14 gedrückt.

Befindet sich der Elektromagnet 4 in der von der Spule 6 unbestromten Stellung, nimmt das Pilotventil B die in Fig. 12 der Zeichnung dargestellte Sicherheitsstellung ein. Dabei liegt der Außenkonus 19 über die Feder 20 beaufschlagt am Ventilsitz 21 des Ablaufventils 24 an und ein sich einstellender Ölfluß durchströmt das geöffnete Betriebsventil 22 in Richtung zu dem von der Notlaufventilscheibe 23 ausgebildeten Notlaufventil.

Eine Bestromung des Elektromagneten 4 mit einem Mindestbetriebsstrom sorgt dafür, dass der Anker 17 des Elektromagneten 4 eine Schubkraft in Richtung des Pilotventils B ausübt und so gegen die Kraft der Feder 20 das Ablaufventil 24 geöffnet wird und das Notlaufventil 23 kurzgeschlossen wird. Das Betriebsventil 22 befindet sich dabei noch in einer weit geöffneten Stellung und erzeugt auf diese Weise nur einen geringen Druckabfall. Mit zunehmender Bestromung des Elektromagneten 4 wird das Betriebsventil 22 weiter geschlossen und erzeugt dadurch einen höheren Druckabfall.

Bei dem vorstehend bereits geschilderten Einfedervorgang bewegt sich die Kolbenstange 2 zusammen mit der Ventilanordnung 1 in den Dämpfer hinein und damit in Richtung zur Druckstufenkammer PD.

Fig. 8 der Zeichnung zeigt dabei den Fluss an Dämpfungsfluid bei einer niedrigen Kolbenstangengeschwindigkeit. Der Fluss an Dämpfungsfluid ist dabei anhand der Pfeile und der gestrichelten Linien ersichtlich.

Bei niedrigen Geschwindigkeiten der Kolbenstange 2 bleibt das Hauptventil 11 geschlossen und es findet nur ein geringfügiger Ölfluß über das Hauptventil 11 statt, indem die Ausnehmungen 63 der Ventilscheibe 12a, die Ausnehmungen 61 der Stützscheibe 12b und die Ausnehmungen 57 der Scheiben 12c durchströmt werden und das Dämpfungsfluid die Vordrossel 26 passiert und in die Vorsteuerkammer 25 eintritt und von dort über das Betriebsventil (Fig. 8a) und den geöffneten Ventilsitz 21 und das Rückschlagventil 9 sowie das Gehäuse 14 in Richtung zur Zugstufenkammer PZ strömt.

Es stellt sich dabei der in Fig. 16 der Zeichnung dargestellte Verlauf der Dämpferkraft über der Kolbenstangengeschwindigkeit beziehungsweise Dämpfergeschwindigkeit ein, der mit dem Segment "A" im Kurvenverlauf bezeichnet ist.

In der Fig. 16 ist mit I der Verlauf der Dämpferkraft aufgetragen über der Dämpfergeschwindigkeit dargestellt bei einer fiktiven Stützscheibe, welche vollflächig ausgeführt ist, also nicht mit Auskragungen oder Flügeln versehen ist, bei der also die Ventilscheibe 12a entlang ihrer gesamten Auflagefläche aufliegen würde.

Dahingegen zeigt der mit II bezeichnete Verlauf der Dämpferkraft den Verlauf der Dämpferkraft bei der Ausbildung der Stützscheibe 12b mit vier Auskragungen entsprechend der Darstellung nach Fig. 7, während der mit III bezeichnete Verlauf der Dämpferkraft den Verlauf der Dämpferkraft bei der Ausbildung der Stützscheibe 12b mit zwei Auskragungen 58 entsprechend der Darstellung nach Fig. 6 zeigt.

Im Bereich der niedrigen Kolbenstangengeschwindigkeiten sind die drei Verläufe I, II, III der Dämpferkraft aufgetragen über der Dämpfergeschwindigkeit weitgehend gleich.

Ein anderes Bild aber stellt sich bei dem im Segment "B" dargestellten Kurvenverläufen ein, welcher dem jeweiligen Verlauf der Dämpferkraft bei mittleren Kolbenstangengeschwindigkeiten entspricht.

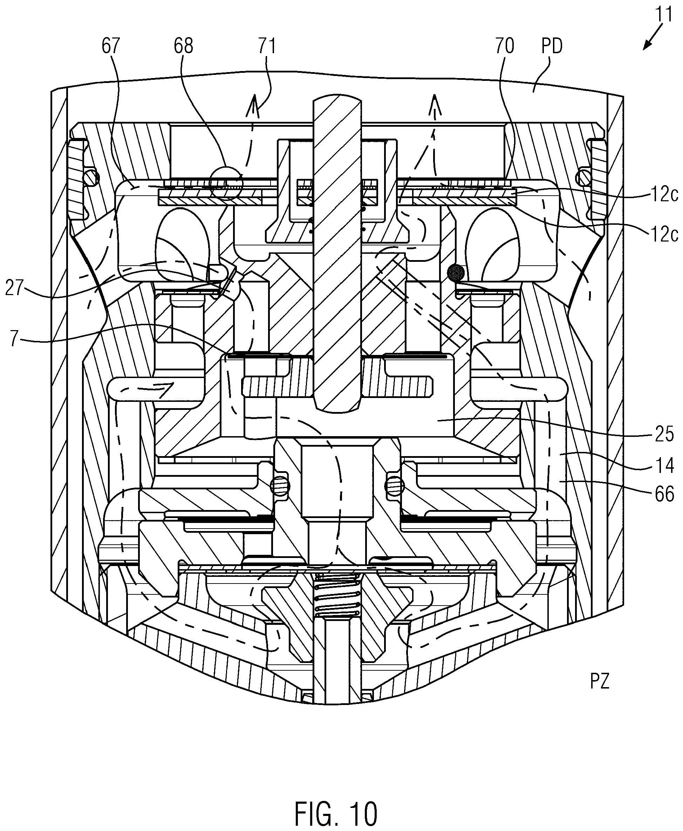

Bei mittleren Kolbenstangengeschwindigkeiten stellt sich zusätzlich zu dem vorstehend beschriebenen Verlauf der Strömung an Dämpfungsfluid die ebenfalls in Fig. 8 dargestellte und mit dem Fall 65 bezeichnete weitere Strömung an Dämpfungsfluid ein. Durch den Druckanstieg in der Druckstufenkammer PD strömt immer noch ein Teil des Dämpfungsfluids über die Ausnehmungen 63 der Ventilscheibe 12a, die Ausnehmungen 61 der Stützscheibe 12b und die Ausnehmungen 57 der Scheiben 12c, wie dies vorstehend beschrieben wurde. Die Ausnehmungen 63 der Ventilscheibe 12a weisen im Bereich der einander gegenüber liegenden gekrümmten Aussenumfangsbereiche eine Innenausnehmung aufweist, welche einen größeren Durchmesser aufweist als die in Hochachsrichtung der Ventilanordnung 1 darunter angeordnete Stützscheibe 12b und sich der Randbereich 68 der Innenausnehmung bei einer Druckbeaufschlagung mit Dämpfungsfluid in Richtung aus dem Innenraum 39 des Ventilgehäuses 14 heraus von der Stützscheibe 12b abhebt, wie dies in Fig. 10 der Zeichnung dargestellt ist.

Darüber hinaus aber sorgt der Druckanstieg in der Druckstufenkammer PD auch dafür, dass sich der Randbereich 62 der biegeweich ausgestalteten Ventilscheibe 12a vom Ventilsitz 16a zur Öffnung eines Spaltraums zwischen dem Randbereich 62 und dem Ventilsitz 16a abhebt.

Da die Stützscheibe 12b einen kreisförmig ausgebildeten ersten Bereich 59 aufweist, der kleiner ist, als der Außendurchmesser der Ventilscheibe 12a, und die Ventilscheibe 12a an der Stützscheibe 12b außerhalb des ersten Bereichs 59 nur an den Auskragungen 58 aufliegt, diese aber nicht entlang der gesamten Umfangserstreckung des kreisförmig ausgebildeten ersten Bereichs 59 vorliegen, kann sich die Ventilscheibe 12a relativ zur Stützscheibe 12b an den nicht von den Auskragungen 58 von unten her unterstützten Bereichen ähnlich einer Federscheibe verformen und auf diese Weise bildet sich zwischen dem Randbereich 62 der Ventilscheibe 12a und dem ringförmigen Ventilsitz 16a entlang eines Teilumfangsbereichs der Ventilscheibe 12a ein Spaltraum und ein durch den Pfeil 65 symbolisierter Ölfluß findet direkt über den Kanal 64 in Richtung zur Zugstufenkammer PZ statt.

Durch die erfindungsgemäße Konfiguration der Ventilanordnung 1 mit der Stützscheibe 12b, welche radial nach außen vorspringende Auskragungen 58 aufweist, die die Ventilscheibe 12a an der Auflageseite der Ventilscheibe 12a an der Stützscheibe 12b nur bereichsweise abstützen, wird erreicht, dass die Ventilscheibe 12a einen Spaltraum beziehungsweise Spalträume zum ringförmigen Ventilsitz 16a öffnen kann zu einem Zeitpunkt, an dem andere in Umfangsrichtung des Randbereichs 62 der Ventilscheibe 12a verlaufende andere Randbereiche, nämlich diejenigen, die von den Auskragungen 58 der Stützscheibe 12b unterstützt beziehungsweise abgestützt werden, noch am Ventilsitz 16a anliegen.

Durch das abschnittsweise oder bereichsweise Abheben des Randbereichs 62 der Ventilscheibe 12a vom Ventilsitz 16a wird erreicht, dass ein Fluss an Dämpfungsfluid durch den sich einstellenden Spaltraum oder die sich einstellenden Spalträume zwischen dem Randbereich 62 und dem Ventilsitz 16a aus der Druckstufenkammer PD in Richtung zur Zugstufenkammer PZ stattfindet, bevor sich die Ventilscheibe 12a vom ringförmigen Ventilsitz 16a vollständig löst und somit wird ein schlagartiges Öffnen des Hauptventils 11 vermieden und die Nachteile der bekannten Ventilanordnung werden beseitigt.

Wie es anhand des Verlaufs I im Segment "B" nach Fig. 16 der Zeichnung ersichtlich ist, findet bei einer fiktiven runden Stützscheibe, also einer Stützscheibe ohne die Auskragungen 58 und dem im Durchmesser kleineren ersten Bereich 59 ein Abknicken des Kurvenverlaufs bei einer Kolbenstangengeschwindigkeit von etwa 0,12 m/s statt.

Wird statt einer vollflächigen runden Zwischenscheibe oder Stützscheibe eine Stützscheibe 12b mit vier Auskragungen 58 eingesetzt, die in Fig. 7 der Zeichnung dargestellt ist, so stellt sich ein Kurvenverlauf II der Dämpferkraft aufgetragen über die Dämpfergeschwindigkeit ein und das scharfe Abknicken des Dämpferkraftverlaufs ist bereits vermieden.

Wenn eine Stützscheibe 12b mit zwei Auskragungen zum Einsatz kommt, wie sie in Fig. 6 der Zeichnung dargestellt ist, stellt sich der mit III bezeichnete Dämpferkraftverlauf ein und damit ein über den gesamten Geschwindigkeitsbereich der mittleren Kolbenstangengeschwindigkeit nahezu linearer Verlauf ein.

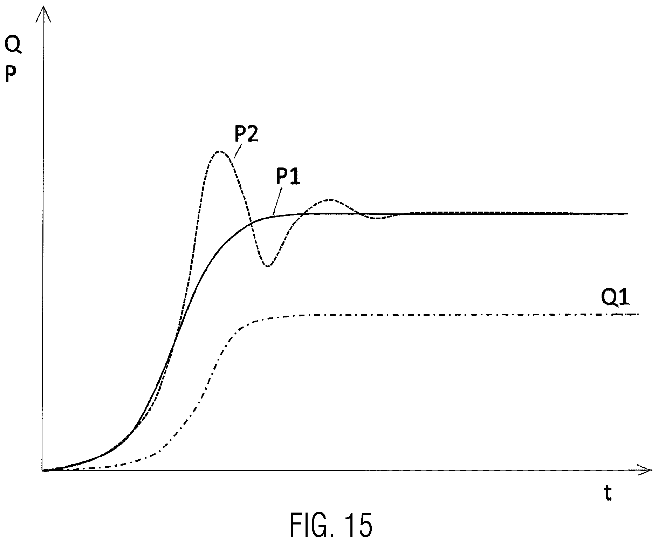

Fig. 15 der Zeichnung zeigt ein Diagramm zur Erläuterung des Verlaufs des Volumenstroms an Dämpfungsfluid und des Druckverlaufs aufgetragen über der Zeit.

Bei der eingangs beschriebenen bekannten Ventilanordnung stellt sich der mit P2 bezeichnete oszillierende Druckverlauf ein, der von einem schlagartigen oder ruckartigen Öffnen des Hauptventils herrührt, wie er eingangs beschrieben wurde. Ein solcher oszillierender Druckverlauf führt zu Komfortminderungen, wie sie vorstehend beschrieben wurden.

Der mit P1 bezeichnete Druckverlauf stellt sich bei der erfindungsgemäßen Ventilanordnung ein und zwar infolge des mit Q1 bezeichneten Volumenstroms an Dämpfungsfluid durch die Ventilanordnung 1 hindurch. Wie es ohne weiteres ersichtlich ist, ist der oszillierende Druckverlauf beseitigt und ebenso sind die Komforteinbußen, die mit der bekannten Ventilanordnung einhergehen, beseitigt.

Wenn die beispielsweise durch ein Überfahren einer Bodenunebenheit auf die Ventilanordnung 1 wirkende Anregung in der Form eines Kraftstoßes dazu führt, dass die Kolbenstangengeschwindigkeit weiter ansteigt und Werte im Bereich der hohen Kolbenstangengeschwindigkeit annimmt, führt dies zu dem in Fig. 9 der Zeichnung dargestellten Ölfluß in der Druckstufe.

Durch die Anregung stellt sich über dem Hauptventil 11 ein weiter ansteigender Druck ein, der auf das Hauptventil 11 wirkt. Wenn diese Kraft, die sich durch den Druckaufbau in der Druckstufenkammer PD einstellt, die Gegenkraft auf der Rückseite des Hauptventils 11 überschreitet, lösen sich die Ventilscheiben 12 des Hauptventils, also die Ventilscheibe 12a, die Stützscheibe 12b und die Auflagerscheiben 12c vollständig vom Ventilsitz 16a, wie dies in Fig. 9 der Zeichnung dargestellt ist.

Die Gegenkraft auf der Rückseite des Hauptventils 11 wird dabei bestimmt von der rückseitigen druckbeaufschlagten Fläche des Ventilkolbens 13 multipliziert mit dem Druck, der vom Pilotventil B aufgebaut wird und der Kraft der Feder 15.

Die flexible Ventilscheibe 12a kann aufgrund der Konfiguration der Stützscheibe 12b einen Durchlassquerschnitt am ringförmigen Ventilsitz 16a druckabhängig freigeben, auch wenn das Hauptventil 11 noch nicht vollständig geöffnet ist, da das vorstehend beschriebene Kräftegleichgewicht noch nicht erreicht wurde.

Diese Konfiguration sorgt für ein stetiges Öffnungsverhalten des Hauptventils 11 gemäß dem Kurvenverlauf II, III in Fig. 16 gemäß dem Segment "B".

Bei hohen Kolbenstangengeschwindigkeiten entsprechend dem Kurvenverlauf im Segment "C" nach Fig. 16 bleibt der nahezu linearer Verlauf der Dämpfungskraft aufgetragen über der Dämpfergeschwindigkeit erhalten.

Beim Ausfedern beziehungsweise der Reboundbewegung des Schwingungsdämpfers 42 bewegt sich die Kolbenstange 2, an der die Ventilanordnung 1 angeordnet ist, aus dem Bereich der Druckstufenkammer PD heraus in Richtung zur Zugstufenkammer PZ. Diese Bewegung führt zu einem Ansteigen des Systemdrucks in der Zugstufenkammer und damit zu einem Ölfluß in Richtung zur Druckstufenkammer.

Fig. 10 der Zeichnung zeigt eine vergrößerte Schnittansicht der Ventilanordnung 1 zur Darstellung der Fluidströmung in der Zugstufe bei niedriger und mittlerer Geschwindigkeit der Kolbenstange, die sich bei der Reboundbewegung eingestellt.

Bei kleinen Bewegungsgeschwindigkeiten bleibt das Hauptventil 11 mit den Ventilscheiben 12 geschlossen und eine Ölströmung findet statt über das Pilotventil B, dies entspricht wiederum dem Kurvenverlauf gemäß dem Segment "A" nach Fig. 16.

Dabei fließt Dämpfungsfluid aus der Zugstufenkammer über die Vordrossel 27 des Hauptventils 11 und das sich aufgrund des Systemdrucks öffnende Rückschlagventil 7 in die Vorsteuerkammer 25 des Pilotventils B und von dort über das Pilotventil B und das Gehäuse 14 beziehungsweise den Ölkanal 66 und die Ausnehmungen 57, 61 und 63 (siehe Fig. 13), in Richtung zur Druckstufenkammer PD.

Der Hülsenkörper 10 ist so ausgebildet, dass er die Ventilscheibe 12a und die Stützscheibe 12b sowie die Anschlagscheiben 12c in einer zueinander ausgerichteten Stellung hält. Dies wird dadurch erreicht, dass der Hülsenkörper 10 mit seinen zylinderförmigen Rohrsegmenten 56 die jeweiligen Ausnehmungen 57, 61 und 63 der Scheiben 12a, 12b, 12c durchsetzt und somit dafür sorgt, dass die Scheiben zueinander verdrehsicher angeordnet sind. Damit bleibt die Querschnittsfläche der jeweiligen Ausnehmungen 57, 61 und 63 der aufeinander gestapelten Scheiben konstant und es wird vermieden, dass sich Mittelstege 55 der Scheiben 12a, 12b, 12c zueinander verdrehen können, was zu einer Veränderung der durchströmbaren Querschnittsfläche führen würde. Der durch die Ausnehmungen gebildete vorbestimmte effektive Durchflussquerschnitt bleibt somit in vorbestimmter Weise erhalten. Auch bei einer etwaigen Ausführungsform der Stützscheibe 12b als vollflächige Scheibe ohne Freistellungen würde diese Funktion des Hülsenkörpers 10 erhalten bleiben.

Wenn die Kolbenstangengeschwindigkeit ansteigt, führt dies zu einem Anstieg des Systemdrucks in der Zugstufenkammer und zu einem Ölfluß auch gemäß dem Pfeil 67 nach Fig. 10.

Wie es anhand von Fig. 10 der Zeichnung in Verbindung mit der anhand von Fig. 13 der Zeichnung ersichtlichen Konfiguration der Stützscheibe 12b und der Ventilscheibe 12a ersichtlich ist, führt der ansteigende Systemdruck zu einem Eintritt von Dämpfungsfluid entsprechend dem Ölflusspfeil 67 in den Bereich des Ausschnitts 68 nach Fig. 10.

Der Anstieg des Systemdrucks führt zu einer Abhubbewegung des radial innenliegenden Bereichs 69 der Ventilscheibe 12a von der Stützscheibe 12b, da der Systemdruck in den Zwischenraum 70 zwischen der Unterseite der Ventilscheibe 12a und der Oberseite der ersten darunterliegenden Auflagerscheibe 12c eindringen kann, da dieser Zwischenraum nicht vom Außenumfangsbereich der Stützscheibe 12b geschlossen ist, da diese in diesem Bereich nicht vollflächig ausgebildet ist, sondern Freistellungen 76 aufweist und die Ventilscheibe 12a an der Oberseite der Stützscheibe 12b nur im Bereich der Auskragungen 58 anliegt.

Durch den sich so einstellenden Ölfluß 71 kann sich der Systemdruck entspannen und ein plötzliches oder schlagartiges oder ruckartiges Abheben der Ventilscheiben 12 (also der Ventilscheibe 12a, Stützscheibe 12b, Auflagerscheiben 12c) vom ringförmigen Ventilsitz 16a wird vermieden. Die zweite oder untere Auflagerscheibe 12c liegt an dem ringförmigen Ventilsitz 16b nach wie vor an, wie dies anhand von Fig. 10 der Zeichnung ersichtlich ist.

Dies entspricht dem Verlauf der Dämpfungskraft aufgetragen über der Dämpfergeschwindigkeit entsprechend dem Segment "B" nach Fig. 16 der Zeichnung.

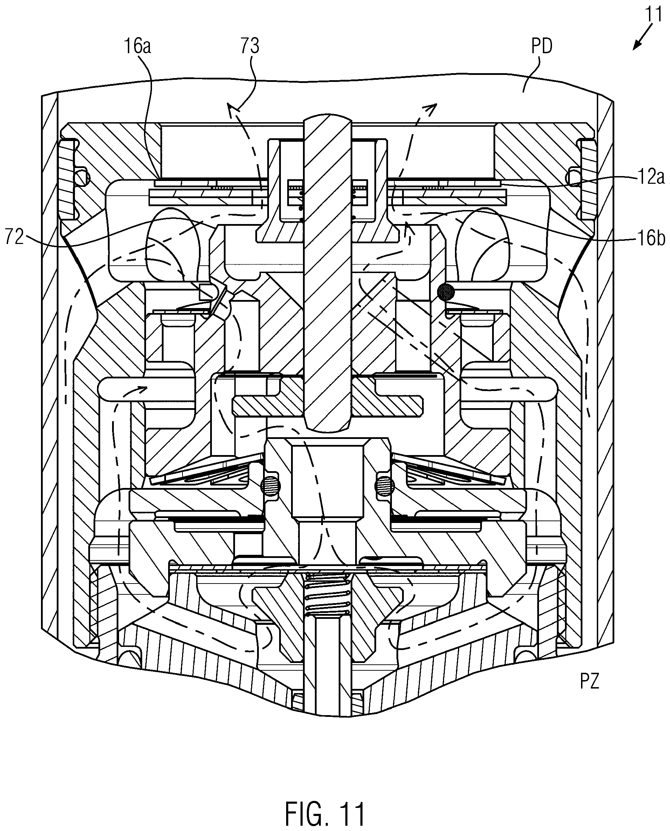

Wenn die Kolbenstangengeschwindigkeit weiter ansteigt, stellt sich der in Fig. 11 der Zeichnung dargestellte Verlauf von Dämpfungsfluid ein.

Wie es ohne weiteres ersichtlich ist, liegt die Ventilscheibe 12a weiterhin am ringförmigen Ventilsitz 16a an. Der steigende Systemdruck führt zu einem Öffnen des Hauptventils 11, da die Gegenkraft, die auf die Rückseite des Ventilkolbens 13 wirkt, überschritten wird und sich der ringförmige Ventilsitz 16b öffnet, da sich der Ventilkolben 13 mit seiner Steuerkante 72 von der Auflagerscheibe 12c löst und somit Spaltraum freigibt, der zum Durchtritt von Dämpfungsfluid entsprechend dem Pfeil 73 nach Fig. 11 der Zeichnung führt.

Die den Ventilkolben 13 beaufschlagende Gegenkraft bestimmt sich aus der rückseitigen druckbeaufschlagten Fläche des Ventilkolbens 13 multipliziert mit dem Druck, der vom Pilotventil B aufgebaut wird und der Vorspannkraft der Scheibenfeder 15.

Wenn der durch den Anstieg des Systemdrucks in der Zugstufenkammer PZ herrschende und das Hauptventil 11 beaufschlagende Kraft größer wird als die vorstehend definierte Gegenkraft, öffnet sich der Spaltraum zwischen der Steuerkante 72 und der Auflagerscheibe 12c und Ölfluß kann durch die Ausnehmungen 57, 61 und 63 der Auflagerscheiben 12c, Stützscheibe 12b und der Ventilscheibe 12a stattfinden, wie dies anhand des Ölflusspfeil 73 nach Fig. 11 der Zeichnung dargestellt ist.

Dies führt zum Aufbau einer Dämpfungskraft aufgetragen über der Dämpfergeschwindigkeit entsprechend dem Segment "C" nach Fig. 16 der Zeichnung.

Die erfindungsgemäße Ventilanordnung kann also auch bei der Reboundbewegung in Abhängigkeit des Systemdrucks Durchlassquerschnitt des Hauptventils 11 freigeben und zwar auch dann, wenn sich das Hauptventil 11 noch nicht vom ringförmigen Ventilsitz 16 abgehoben hat.

Dies trägt auch bei der Reboundbewegung zu einem stetigen Öffnungsverhalten des Hauptventils im Bereich des Segments "B", also bei mittleren Dämpfergeschwindigkeiten oder Kolbenstangengeschwindigkeiten bei und der Verlauf der Dämpferkraft aufgetragen über der Dämpfergeschwindigkeit kann durch die Ausgestaltung der Stützscheibe 12b mit zwei oder mehr Auskragungen 58 beeinflusst werden.

Die Konfiguration der Stützscheibe 12b mit zwei Auskragungen oder Flügeln 58 führt zu einem geradlinigeren Verlauf III der Dämpferkraft aufgetragen über der Dämpfergeschwindigkeit im Bereich mittlerer Kolbenstangengeschwindigkeiten, während die Ausbildung der Stützscheibe 12b mit vier Auskragungen oder Flügeln 58 zu einem leicht verrundeten Verlauf II der Dämpferkraft führt. Fig. 16. Zeichnung zeigt dabei den Verlauf der Dämpferkraft über der Dämpfergeschwindigkeit bei einer hohen Bestromung des Elektromagneten 4 und der Verlauf der jeweiligen Kurven II, III kann durch eine entsprechende Veränderung der Strombeaufschlagung der Spule 6 des Elektromagneten 4 geändert werden.

Wie es anhand von Fig. 15 der Zeichnung ersichtlich ist, kann durch die erfindungsgemäße Ventilanordnung das Problem des Überschwingens des Systemdruckverlaufs und der sich daraus ergebenden Komfortnachteile wirksam vermieden werden.

Hinsichtlich vorstehend im Einzelnen nicht näher erläuterter Merkmale der Erfindung wird im Übrigen ausdrücklich auf die Patentansprüche und die Zeichnung verwiesen.

### Bezugszeichenliste

1.Ventilanordnung
2. Kolbenstange
3. Rohr
4. Elektromagnet
5. Gehäuse
6. Spule
7. Rückschlagventil
8. Rückschlagventil
9. Rückschlagventil
10. Rückschlagventil, Hülsenkörper
11. Hauptventil
12. Ventilscheiben
12a. Ventilscheibe
12b. Stützscheibe
12c. Auflagerscheibe
13. Ventilkolben
14. Ventilgehäuse
15. Federscheibe
16a. ringförmiger Ventilsitz
16b. ringförmiger Ventilsitz
17. Anker
18. Ventilfeder
19. Dichtkörper
20. Feder
21. Ventilsitz
22. Betriebsventil
23. Notlaufventilscheibe, Notlaufventil
24. Ablaufventil
25. Vorsteuerkammer
26. Durchlass
27. Durchlass
28. Distanzscheibe
29. Feder
30. Ventilsitz
31. Einstellscheiben
32. O-Ring
33. Deckscheibe
34. Anschlagscheibe
35. Federscheibe
36. Sicherungsring
37. Führungsstift
38. Längsachse
39. Innenraum des Ventilgehäuses
40. Teleskopfedergabelbein
41. Klemmfaust
42. Schwingungsdämpfer
43. Innenraum
44. Feder
45. Widerlager
46. Dichtungseinrichtung
47. Außenkonus
48. Stützwand
49. Ausnehmung der Scheibe 18
50. Bund
51. Wandung
52. Körper
53. Boden
54. Ausnehmungen
55. Mittelsteg
56. Rohrsegment
57. Ausnehmung der Auflagerscheibe
58. Auskragung der Stützscheibe
59. kreisförmiger Bereich der Stützscheibe
60. zweiter Bereich der Stützscheibe
61. Ausnehmung
62. Randbereich
63. Ausnehmung
64. Ölfluß, Pfeil
65. Pfeil
66. Ölkanal
67.Ölfluss
68. Ausschnitt
69. radial innenliegender Bereich
70. Zwischenraum
71. Ölfluß
72. Steuerkante
73. Pfeil
74. Anlageflächenseite
75. Auflagerflächenseite
76. Freistellung
77. Schlitz
78. Innenausnehmung
80. Motorrad
81. Steckachse
82. Vorderrad
83. Hinterrad
PD: Druckstufenkammer
PZ: Zugstufenkammer
H: Hochachsrichtung
H1: Hochachsrichtung
B: Pilotventil

## Patentansprüche

1. Ventilanordnung (1) für einen Schwingungsdämpfer, mit einem einen ringförmigen Ventilsitz (16a) aufweisenden und zur Aufnahme von Dämpfungsfluid vorgesehenen Ventilgehäuse (14) und einem Ventilkolben (13), der in einem Innenraum (39) des Ventilgehäuses (14) relativ zum Ventilsitz (16) axial verschiebbar angeordnet ist und der Ventilkolben (13) ein Hauptventil (11) aufweist, welches eine flexible kreisförmige Ventilscheibe (12a) aufweist, die mit einer Anlageflächenseite (74) an dem Ventilsitz (16) lösbar in Anlage bringbar ist und die Ventilscheibe (12a) mittels eines Führungsstifts (37) am Ventilkolben (13) relativ zu diesem axial bewegbar und radial geführt angeordnet ist und die Ventilanordnung (1) einen Elektromagneten (4) mit einem Anker (17) zur Beaufschlagung eines Pilotventils (B) aufweist, **dadurch gekennzeichnet, dass** an der von der Anlageflächenseite (74) der Ventilscheibe (12a) abgewandten Auflageflächenseite (75) der Ventilscheibe (12a) eine flexible Stützscheibe (12b) angeordnet ist, die so eingerichtet ist, dass die Ventilscheibe (12a) an der flexiblen Stützscheibe (12b) entlang eines sich in Umfangsrichtung der Ventilscheibe (12a) erstreckenden ersten Teilumfangbereichs aufliegt und dass die Ventilscheibe (12a) entlang eines sich in Umfangsrichtung der Ventilscheibe (12a) erstreckenden zweiten Teilumfangsbereichs infolge einer Einwirkung eines durch das Dämpfungsfluid vermittelten Druckes verformbar ist.

2. Ventilanordnung (1) nach Anspruch 1, **dadurch gekennzeichnet, dass** die Stützscheibe (12b) in Umfangsrichtung mindestens eine Freistellung (76) aufweist, an der die Ventilscheibe (12a) frei ist von einer Unterstützung durch die Stützscheibe (12b) und sich die Ventilscheibe (12a) bei einer Druckbeaufschlagung in Richtung der Stützscheibe (12b) im Bereich der Freistellung (76) stärker durchbiegt als im Bereich der Stützscheibe (12b) ohne Freistellung (76).

3. Ventilanordnung (1) nach Anspruch 1 oder 2, **dadurch gekennzeichnet, dass** die Stützscheibe (12b) einen in einer Draufsichtansicht kreisförmig ausgebildeten ersten Bereich (59) mit einem ersten Durchmesser aufweist, welcher kleiner ist als der Außendurchmesser der Ventilscheibe (12a), und sich vom Außenumfang des ersten Bereichs (59) ausgehend mindestens ein, einen zweiten Durchmesser aufweisender zweiter Bereich (60) radial nach außen gerichtet erstreckt, welcher sich entlang eines Teilbereichs des Umfangs der Stützscheibe (12b) in Umfangsrichtung der Stützscheibe (12b) erstreckt.

4. Ventilanordnung (1) nach einem der vorstehenden Ansprüche, **dadurch gekennzeichnet, dass** die Stützscheibe (12b) mindestens zwei sich radial nach außen erstreckende, einander gegenüberliegende Auskragungen (58) aufweist, welche von der Mitte der Stützscheibe (12b) aus betrachtet eine Radialerstreckung kleiner oder gleich dem Außendurchmesser der Ventilscheibe (12a) aufweisen.

5. Ventilanordnung (1) nach einem der vorstehenden Ansprüche, **dadurch gekennzeichnet, dass** die Ventilanordnung (1) mindestens eine Auflagerscheibe (12c) aufweist, an der die Stützscheibe (12b) mit ihrer von der Ventilscheibe (12a) abgewandten Seite aufliegt.

6. Ventilanordnung (1) nach einem der vorstehenden Ansprüche, **dadurch gekennzeichnet, dass** die Ventilanordnung (1) einen rohrstückförmigen Hülsenkörper (10) aufweist, der entlang eines Teilbereichs seiner Längserstreckung einen die Wandung (51) des Hülsenkörpers (10) mit einander gegenüberliegenden Ausnehmungen (54) ausbildenden Schlitz (77) aufweist und zu den Ausnehmungen (54) benachbarte und sich von einem Boden des Hülsenkörpers (10) weg erstreckende und in Längsrichtung des Hülsenkörpers (10) verlaufende zylinderförmige Rohrsegmente (56) ausgebildet sind.

7. Ventilanordnung nach Anspruch 6, **dadurch gekennzeichnet, dass** die Ventilscheibe (12a) und/oder die Stützscheibe (12b) innerhalb des Außenumfangs mit zwei Ausnehmungen (63, 61) versehen ist, zwischen denen ein Mittelsteg (55) ausgebildet ist, wobei die Ausnehmungen (63, 61) von den Rohrsegmenten (56) durchsetzt sind.

8. Ventilanordnung (1) nach einem der vorstehenden Ansprüche, **dadurch gekennzeichnet, dass** das Pilotventil (B) einen mit einem Außenkonus (47) versehenen Dichtkörper (19) aufweist, welcher mittels einer Feder (20) beaufschlagt an einem ringförmigen Ventilsitz (21) eines Ablaufventils (29) in Anlage bringbar ist

9. Ventilanordnung (1) nach einem der vorstehenden Ansprüche, **dadurch gekennzeichnet, dass** das Pilotventil (3) eine Ventilscheibe (18) aufweist, welche im unbestromten Zustand des Elektromagneten (4) einen Fluidstrom aus einer Vorsteuerkammer (25) des Pilotventils (B) über das Ventilgehäuse (14) ermöglicht.

10. Ventilanordnung (1) nach einem der vorstehenden Ansprüche, **dadurch gekennzeichnet, dass** die Ventilscheibe (12a) eine Innenausnehmung aufweist, welche einen größeren Durchmesser aufweist als die in Hochachsrichtung der Ventilanordnung (1) darunter angeordnete Stützscheibe (12b) und sich der Randbereich (68) der Innenausnehmung bei einer Druckbeaufschlagung mit Dämpfungsfluid in Richtung aus dem Innenraum (39) des Ventilgehäuses (14) heraus von der Stützscheibe (12b) abhebt.

11. Ventilanordnung (1) nach einem der vorstehenden Ansprüche, **dadurch gekennzeichnet, dass** die Ventilscheibe (12a) einen am Außendurchmesser angeordneten Randbereich (62) aufweist, welcher sich bei einer Druckbeaufschlagung mit Dämpfungsfluid in Richtung des Innenraums vom Ventilsitz (16) in Richtung in den Innenraum (39) abhebt.

12. Schwingungsdämpfer mit einem Rohr (3) und einer Kolbenstange (2), wobei das Rohr (3) einen zur Aufnahme des Dämpfungsfluids ausgebildeten Innenraum 43 aufweist, **gekennzeichnet durch** eine Ventilanordnung (1) nach einem der vorstehenden Ansprüche und einer Druckstufenkammer (PD) sowie einer Zugstufenkammer (PZ), wobei die beiden Kammern einen jeweiligen Innenraum aufweisen, der von der Ventilanordnung (1) körperlich getrennt und fluidisch verbunden ausgebildet ist.

13. Fahrzeug mit einem Vorderrad (82) und einem Hinterrad (83), **gekennzeichnet durch** einen Schwingungsdämpfer (42) nach Anspruch 12.

## Claims

1. Valve arrangement (1) for a vibration damper, having a valve housing (14) having an annular valve seat (16a) and provided for receiving damping liquid, and a valve piston (13) that is arranged in an interior (39) of the valve housing (14) such that it can be axially shifted relative to the valve seat (16), and the valve piston (13) has a main valve (11) that has a flexible circular valve disc (12a) that can be brought into releasable contact with a contact surface side (74) on the valve seat (16) and the valve disc (12a) is arranged such that it can be moved axially on the valve piston (13) relative to said valve piston by means of a guide pin (37) and radially guided and the valve arrangement (1) has an electromagnet (4) having an anchor (17) for biasing a pilot valve (B), **characterised in that** a flexible support disc (12b) is arranged on the support surface side (75) of the valve disc (12a) facing away from the contact surface side (74) of the valve disc (12a), said flexible support disc being equipped such that the valve disc (12a) is supported on the flexible support disc (12b) along a first partial peripheral region in the peripheral direction of the valve disc (12a), and **in that** the valve disc (12a) can be re-shaped along a second partial peripheral region extending in the peripheral direction of the valve disc (12a) as a consequence of an application of a pressure imparted by the damping liquid.

2. Valve arrangement (1) according to claim 1, **characterised in that** the support disc (12b) has at least one release (76) in the peripheral direction, at which the valve disc (12a) is free from support by the support disc (12b), and the valve disc (12a) bends more strongly when pressure is applied in the direction of the support disc (12b) in the region of the release (76) than in the region of the support disc (12b) without a release (76).

3. Valve arrangement (1) according to claim 1 or 2, **characterised in that** the support disc (12b) has a first region (59) designed to be circular in an aerial view, having a first diameter that is smaller than the outer diameter of the valve disc (12a), and at least one second region (60) having a second diameter extends aligned radially outwards from the outer periphery of the first region (59), said second region extending along a partial region of the periphery of the support disc (12b) in the peripheral direction of the support disc (12b).

4. Valve arrangement (1) according to one of the preceding claims, **characterised in that** the support disc (12b) has at least two outwardly extending cantilevers (58) lying opposite each other, which have a radial extension that is smaller than or equal to the outer diameter of the valve disc (12a) when viewed from the centre of the support disc (12b).

5. Valve arrangement (1) according to one of the preceding claims, **characterised in that** the valve arrangement (1) has at least one bearing disc (12c) on which the support disc (12b) is supported with its side facing away from the valve disc (12a).

6. Valve arrangement (1) according to one of the preceding claims, **characterised in that** the valve arrangement (1) has a pipe-shaped sleeve body (10) that has a slit (77) forming the wall (51) of the sleeve body (10) with cavities (54) lying opposite one another along a partial region of its longitudinal extension, and cylindrical pipe segments (56) are formed next to the cavities (54) and extending away from a base of the sleeve body (10) and running in the longitudinal direction of the sleeve body (10).

7. Valve arrangement according to claim 6, **characterised in that** the valve disc (12a) and/or the support disc (12b) is provided with two cavities (63, 61) within the outer periphery, between which a central bar (55) is formed, wherein the cavities (63, 61) are passed through by the pipe segments (56).

8. Valve arrangement (1) according to one of the preceding claims, **characterised in that** the pilot valve (B) has a sealing body (19) provided with an outer cone (47), which can be brought into contact with an annular valve seat (21) of an outlet valve (29) applied by means of a spring (20).

9. Valve arrangement (1) according to one of the preceding claims, **characterised in that** the pilot valve (3) has a valve disc (18) that enables a liquid current from a pilot chamber (25) of the pilot valve (B) via the valve housing (14) in the de-energised state of the electromagnet (4).

10. Valve arrangement (1) according to one of the preceding claims, **characterised in that** the valve disc (12a) has an inner cavity that has a larger diameter than the support disc (12b) arranged beneath it in the vertical axial direction of the valve arrangement (1), and the edge region (68) of the inner cavity lifts away from the support disc (12b) in the event of an application of pressure with damping liquid in the direction out of the interior (39) of the valve housing (14).

11. Valve arrangement (1) according to one of the preceding claims, **characterised in that** the valve disc (12a) has an edge region (62) arranged on the outer diameter, which lifts away in the direction into the interior (39) in the event of an application of pressure with damping liquid in the direction of the interior of the valve seat (16).

12. Vibrating damper having a pipe (3) and a piston rod (2), wherein the pipe (3) has an interior (43) designed to receive the damping liquid, **characterised by** a valve arrangement (1) according to one of the preceding claims and a compression stage chamber (PD) and a rebound stage chamber (PZ), wherein the two chambers have a respective interior that is designed to be physically separated from, and fluidically connected to, the valve arrangement (1).

13. Vehicle having a front wheel (82) and a back wheel (83), **characterised by** a vibrating damper (42) according to claim 12.

## Revendications

1. Ensemble formant soupape (1) destiné à un amortisseur de vibrations, comportant un carter de soupape (14) qui présente un siège de soupape (16a) annulaire et est prévu pour recevoir du liquide d'amortissement, et un piston de soupape (13) qui est agencé axialement mobile par rapport au siège de soupape (16) dans une chambre intérieure (39) du carter de soupape (14), ledit piston de soupape (13) présentant une soupape principale (11) présentant un disque de soupape (12a) circulaire flexible susceptible de venir en butée contre le siège de soupape (16) de manière amovible par un côté surface d'appui (74), et ledit disque de soupape (12a) étant agencé sur le piston de soupape (13) au moyen d'une broche de guidage (37) en étant axialement mobile par rapport à ce dernier et apte à subir un guidage radial et ledit ensemble formant soupape (1) présentant un électroaimant (4) doté d'une armature (17) permettant de solliciter une soupape pilote (B), **caractérisé en ce que**, sur le côté surface de support (75) du disque de soupape (12a), qui est opposé au côté surface d'appui (74) du disque de soupape (12a), il est agencé un disque de soutien (12b) flexible conçu de manière que le disque de soupape (12a) repose sur le disque de soutien (12b) flexible le long d'une première partie circonférentielle partielle s'étendant dans le sens circonférentiel du disque de soupape (12a) et que le disque de soupape (12a) est déformable le long d'une deuxième partie circonférentielle partielle s'étendant dans le sens circonférentiel du disque de soupape (12a) sous l'effet d'une pression assurée par le liquide d'amortissement.

2. Ensemble formant soupape (1) selon la revendication 1, **caractérisé en ce que** le disque de soutien (12b) présente au moins une découpe (76) dans le sens circonférentiel, au niveau de laquelle le disque de soupape (12a) est non soutenu par le disque de soutien (12b) et **en ce que** le disque de soupape (12a) subit une flexion plus forte dans la zone de la découpe (76), en cas de pression exercée en direction du disque de soutien (12b), que dans la zone du disque de soutien (12b) exempte de découpe (76).

3. Ensemble formant soupape (1) selon la revendication 1 ou 2, **caractérisé en ce que** le disque de soutien (12b) présente une première zone (59) de conception circulaire, vue de dessus, qui présente un premier diamètre qui est inférieur au diamètre extérieur du disque de soupape (12a), et **en ce qu'**au moins une deuxième zone (60) présentant un deuxième diamètre s'étend radialement vers l'extérieur, en partant de la circonférence extérieure de la première zone (59) et s'étend le long d'une zone partielle de la circonférence du disque de soutien (12b) dans le sens circonférentiel du disque de soutien (12b).

4. Ensemble formant soupape (1) selon l'une des revendications précédentes, **caractérisé en ce que** le disque de soutien (12b) présente au moins deux porte-à-faux (58) mutuellement opposés qui s'étendent radialement vers l'extérieur et qui présentent, vus à partir du centre du disque de soutien (12b), une étendue radiale inférieure ou égale au diamètre extérieur du disque de soupape (12a).

5. Ensemble formant soupape (1) selon l'une des revendications précédentes, **caractérisé en ce que** l'ensemble formant soupape (1) présente au moins un disque d'appui (12c) sur lequel repose le disque de soutien (12b) par son côté détourné du disque de soupape (12a).

6. Ensemble formant soupape (1) selon l'une des revendications précédentes, **caractérisé en ce que** l'ensemble formant soupape (1) présente un corps de douille (10) tubulaire présentant, le long d'une zone partielle de son étendue en longueur, une fente (77) formant la paroi (51) du corps de douille (10) et comportant des évidements (54) opposés, et **en ce que** sont formés des segments de tube (56) cylindriques adjacents aux évidements (54), qui s'étendent à partir d'un fond du corps de douille (10) selon la direction longitudinale du corps de douille (10).

7. Ensemble formant soupape selon la revendication 6, **caractérisé en ce que** le disque de soupape (12a) et/ou le disque de soutien (12b) sont pourvus, sur l'intérieur de leur circonférence extérieure, de deux évidements (63, 61) entre lesquels est formée une traverse centrale (55), lesdits évidements (63, 61) étant pénétrés par les segments de tube (56).

8. Ensemble formant soupape (1) selon l'une des revendications précédentes, **caractérisé en ce que** la soupape pilote (B) présente un corps d'étanchéité (19) doté d'un cône extérieur (47) et qui, sollicité au moyen d'un ressort (20), est susceptible de venir en butée contre un siège de soupape (21) annulaire d'une soupape de drainage (29).

9. Ensemble formant soupape (1) selon l'une des revendications précédentes, **caractérisé en ce que** la soupape pilote (3) présente un disque de soupape (18) qui, à l'état non alimenté de l'électroaimant (4), permet un écoulement de fluide hors d'une chambre pilote (25) de la soupape pilote (B) par le biais du carter de soupape (14).

10. Ensemble formant soupape (1) selon l'une des revendications précédentes, **caractérisé en ce que** le disque de soupape (12a) présente un évidement interne présentant un plus grand diamètre que celui du disque de soutien (12b) situé sous celui-ci, vu selon le sens de l'axe vertical de l'ensemble formant soupape (1), et **en ce que** la zone de bord (68) de l'évidement interne se relève par rapport au disque de soutien (12b), en cas de sollicitation par une pression de liquide d'amortissement, vers l'extérieur de la chambre intérieure (39) du carter de soupape (14).

11. Ensemble formant soupape (1) selon l'une des revendications précédentes, **caractérisé en ce que** le disque de soupape (12a) présente une zone de bord (62) agencée au niveau du diamètre extérieur qui se relève par rapport au siège de soupape (16), en cas de sollicitation par une pression de liquide d'amortissement, vers l'intérieur de la chambre intérieure (39).

12. Amortisseur de vibrations comportant un tube (3) et une tige de piston (2), ledit tube (3) présentant une chambre intérieure (43) destinée à recevoir le liquide d'amortissement, **caractérisé par** un ensemble formant soupape (1) selon l'une des revendications précédentes, et comportant une chambre d'étage de compression (PD) ainsi qu'une chambre d'étage de traction (PZ), lesdites deux chambres présentant une chambre intérieure respective séparée physiquement de l'ensemble formant soupape (1) mais reliée fluidiquement à celui-ci.

13. Véhicule doté d'une roue avant (82) et d'une roue arrière (83), **caractérisé par** un amortisseur de vibrations (42) selon la revendication 12.
